# EUROPEAN PATENT APPLICATION

(11) **EP 4 807 514 A1**
(43) Date of publication of application: **16.09.2026**
(21) Application number: 25735050.4
(22) Date of filing: 01.07.2025
(51) Int. Cl.: G06F 3/0484, G06F 3/0481, G06F 1/16

(54) **ELECTRONIC DEVICE FOR DISPLAYING PLURALITY OF APPLICATIONS IN PARTIALLY FOLDED STATE AND CONTROL METHOD**

(30) Priority: 02.08.2024 KR 20240103448; 30.08.2024 KR 20240117838
(71) Applicant: Samsung Electronics Co., Ltd, Suwon-si, Gyeonggi-do 16677 (KR)
(72) Inventor: BANG, Hyosang, Suwon-si, Gyeonggi-do 16677 (KR); BAE, Hyerim, Suwon-si, Gyeonggi-do 16677 (KR)
(74) Representative: Nederlandsch Octrooibureau
(86) International application number: PCT/KR2025/009351
(87) International publication number: WO 2026/029399

(57) **Abstract**

Provided is an electronic device including: a memory for storing instructions; and at least one processor, wherein if executed by the at least one processor, the instructions cause the electronic device to display a first application and a second application in a landscape mode, identify a switch of the electronic device from the landscape mode to a portrait mode based on a rotation of the electronic device detected through a third sensor, identify whether either a first housing part or a third housing part is in a partially folded state based on a first folding angle detected through a first sensor and a second folding angle detected through a second sensor, and display the second application corresponding to a predetermined type in an upper region and display the first application in a lower region among a first region and a second region, which are divided along a first boundary caused by the partially folded state of the first housing part or a second boundary caused by the partially folded state of the third housing part, if either the first housing part or the third housing part is identified as being in the partially folded state.

## Description

### [Technical Field]

The present disclosure relates to an electronic device for displaying a screen based on a change in its state and a method for displaying the screen of the electronic device.

### [Background Art]

With the recent advancement of electronic technology, an electronic device having a transformable form factor has been developed. For example, the electronic device such as a foldable phone is a representative example. Such an electronic device may provide any of various states such as a folded state, an unfolded state, or a partially folded state by folding the same.

### [Technical Solution]

According to an embodiment of the present disclosure, provided is an electronic device including: a first housing part; a second housing part pivotally coupled to the first housing part; a third housing part pivotally coupled to the second housing part; a first hinge structure pivotally connecting the first housing part to the second housing part; a second hinge structure pivotally connecting the second housing part to the third housing part; a first display disposed on one surface that extends across the first housing part, the second housing part, and the third housing part; a second display disposed in a partial region on the other surface opposite to the first display; a first sensor configured to detect a first folding angle between the first housing part and the second housing part; a second sensor configured to detect a second folding angle between the second housing part and the third housing part; and a third sensor configured to detect a rotation of the electronic device; a memory for storing instructions; and at least one processor, wherein if executed by the at least one processor, the instructions cause the electronic device to display a first application and a second application in a landscape mode, identify a switch of the electronic device from the landscape mode to a portrait mode based on the rotation detected through the third sensor, identify whether either the first housing part or the third housing part is in a partially folded state based on the first folding angle detected through the first sensor and the second folding angle detected through the second sensor, and display the second application corresponding to a predetermined type in an upper region and display the first application in a lower region among a first region and a second region, which are divided along a first boundary caused by the partially folded state of the first housing part or a second boundary caused by the partially folded state of the third housing part, if either the first housing part or the third housing part is identified as being in the partially folded state.

According to an embodiment of the present disclosure, provided is a control method of an electronic device, which includes a first housing part, a second housing part pivotally coupled to the first housing part, a third housing part pivotally coupled to the second housing part, a first hinge structure pivotally connecting the first housing part to the second housing part, a second hinge structure pivotally connecting the second housing part to the third housing part, a first display disposed on one surface that extends across the first housing part, the second housing part, and the third housing part, a second display disposed in a partial region on the other surface opposite to the first display, a first sensor configured to detect a first folding angle between the first housing part and the second housing part, a second sensor configured to detect a second folding angle between the second housing part and the third housing part, and a third sensor configured to detect a rotation of the electronic device, the method including: an operation of displaying a first application and a second application in a landscape mode; an operation of identifying a switch of the electronic device from the landscape mode to a portrait mode based on the rotation detected through the third sensor; an operation of identifying whether either first housing part or the third housing part 130 is in a partially folded state based on the first folding angle detected through the first sensor and the second folding angle detected through the second sensor; an operation of displaying the second application corresponding to a predetermined type in an upper region and displaying the first application in a lower region among a first region and a second region, which are divided along a first boundary caused by the partially folded state of the first housing part, if the first housing part is identified as being in the partially folded state; and an operation of displaying the second application corresponding to the predetermined type in the upper region and displaying the first application in the lower region among the first region and the second region, which are divided along a second boundary caused by the partially folded state of the third housing part, if the third housing part is identified as being in the partially folded state.

### [Description of Drawings]

FIG. 1A illustrates an example of a first state of an electronic device according to an embodiment of the present disclosure.
FIG. 1B illustrates an example of a second state of the electronic device according to an embodiment of the present disclosure.
FIG. 1C illustrates an example of a third state of the electronic device according to an embodiment of the present disclosure.
FIG. 2A is a plan view of the electronic device from which a first display is removed according to an embodiment of the present disclosure.
FIG. 2B is a rear review of the electronic device from which a rear cover and a second display are removed according to an embodiment of the present disclosure.
FIG. 3A is a block diagram of the exemplary electronic device capable of performing operations described in the present disclosure.
FIG. 3B is a block diagram of the exemplary electronic device capable of performing operations described in the present disclosure.
FIG. 4A is a diagram for describing the electronic device that displays an application corresponding to a predetermined type in the upper region if rotated clockwise according to an embodiment of the present disclosure.
FIG. 4B is a diagram for describing the electronic device that displays the application corresponding to a predetermined type in the upper region if rotated counterclockwise according to an embodiment of the present disclosure.
FIG. 4C is a diagram for describing the electronic device that displays the application corresponding to a predetermined type in the upper region if rotated clockwise according to an embodiment of the present disclosure.
FIG. 4D is a diagram for describing the electronic device that displays the application corresponding to a predetermined type in the upper region if rotated counterclockwise according to an embodiment of the present disclosure.
FIG. 5 is a diagram for describing the electronic device that displays the application corresponding to a predetermined type in the upper region if rotated in its partially folded state according to an embodiment of the present disclosure.
FIG. 6 is a diagram for describing the landscape and portrait mode layouts of the application according to an embodiment of the present disclosure.
FIG. 7A is a diagram for describing the electronic device that displays any one activated application in the upper region among the applications each corresponding to the predetermined type according to an embodiment of the present disclosure.
FIG. 7B is a diagram for describing the electronic device that displays the application in the upper region based on a ratio of the application according to an embodiment of the present disclosure.
FIG. 8 is a diagram for describing the electronic device that enters a multi-window mode by identifying its partially folded state according to an embodiment of the present disclosure.
FIG. 9 is a diagram for describing the electronic device that switches from a portrait mode to a landscape mode according to an embodiment of the present disclosure.
FIG. 10A is a diagram for describing the electronic device that switches from the landscape mode to the portrait mode in the multi-window mode according to an embodiment of the present disclosure.
FIG. 10B is a diagram for describing the electronic device that switches from the landscape mode to the portrait mode in the multi-window mode according to an embodiment of the present disclosure.
FIG. 11 is a flowchart for describing a control method of an electronic device according to an embodiment of the present disclosure.

### [Best Mode]

Hereinafter, the present disclosure is described in detail with reference to the accompanying drawings.

General terms currently widely used are selected as terms used in embodiments of the present disclosure in consideration of their functions in the present disclosure, and may be changed based on the intentions of those skilled in the art, a judicial precedent, the emergence of a new technique, or the like. In addition, in a specific case, terms arbitrarily selected by an applicant may be present. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In this specification, an expression "have", "may have", "include", "may include", or the like indicates the presence of a corresponding feature (for example, a numerical value, a function, an operation, or a component such as a part), and does not exclude the presence of an additional feature.

An expression, "at least one of A or/and B" may indicate either "A or B", or "both of A and B."

Expressions "first", "second", and the like, used in the present disclosure, may indicate various components regardless of the sequence and/or importance of the components. These expressions are used only to distinguish one component from another component, and do not limit the corresponding component.

If any component (for example, a first component) is described as being "(operatively or communicatively) coupled with/to or connected to" another component (for example, a second component), it should be understood that any component may be directly coupled to another component or may be coupled to another component through yet another component (for example, a third component).

A term of a singular number may include its plural number unless explicitly indicated otherwise in the context. It should be understood that a term "include", "formed of", or the like used in this specification specifies the presence of features, numerals, steps, operations, components, parts, or combinations thereof, mentioned in the specification, and does not preclude the presence or addition of one or more other features, numerals, steps, operations, components, parts, or combinations thereof.

In present disclosure, a term "user" may refer to a person using an electronic device or a device using the electronic device (e.g., artificial intelligence electronic device).

Hereinafter, the embodiments of the present disclosure are described in detail with reference to the accompanying drawings.

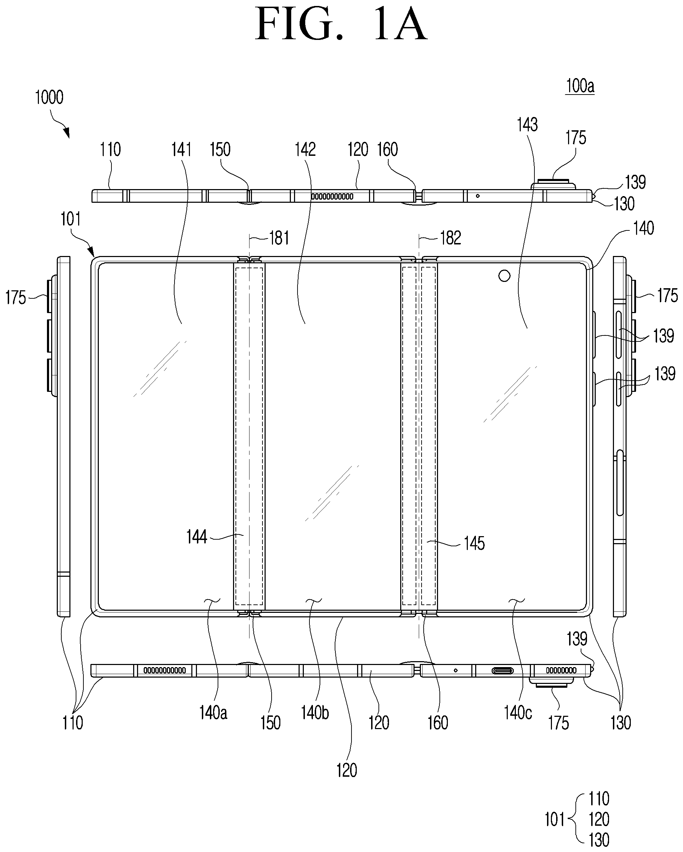

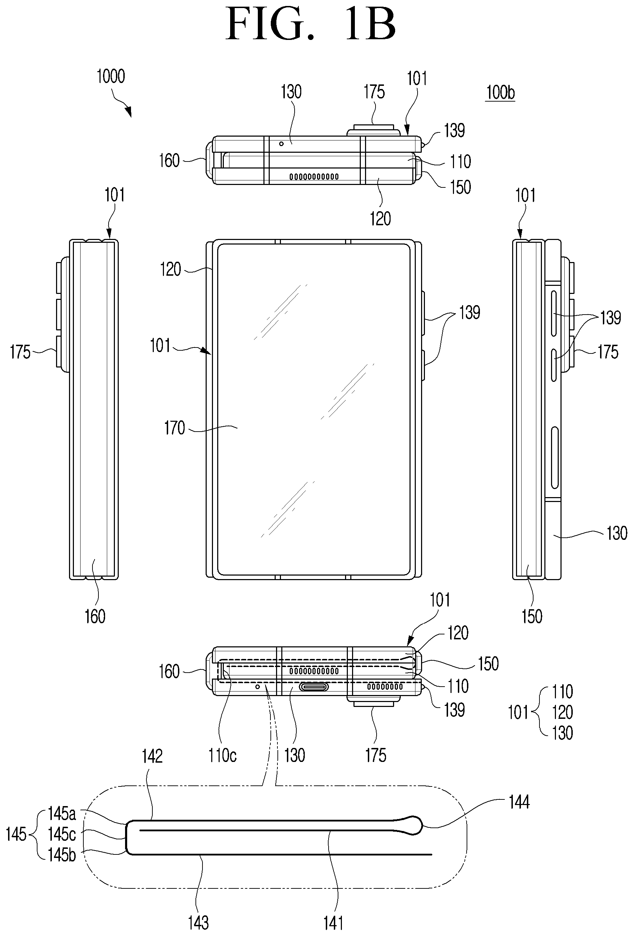

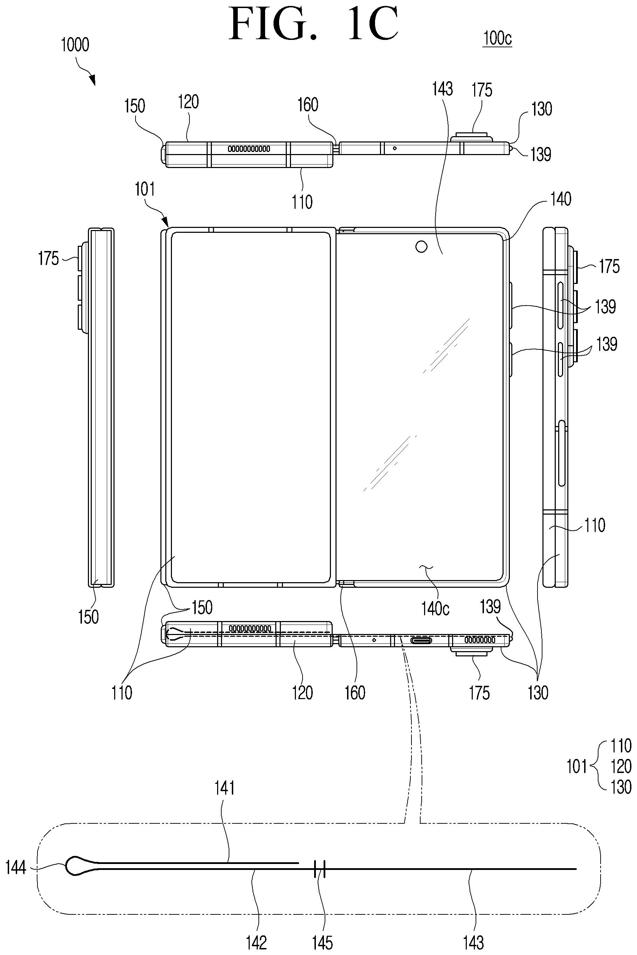

FIG. 1A illustrates an example of a first state of an electronic device according to an embodiment of the present disclosure. FIG. 1B illustrates an example of a second state of the electronic device according to an embodiment of the present disclosure. FIG. 1C illustrates an example of a third state of the electronic device according to an embodiment of the present disclosure.

Referring to FIGS. 1a, 1b, and 1c, the electronic device 1000 may include a housing structure 101, the flexible display 140, the first hinge structure 150, the second hinge structure 160, and a display 170.

The housing structure 101 may include a first housing part 110, a second housing part 120, and a third housing part 130. The housing part may be replaced with an expression such as housing, body, or frame, for example.

The first housing part 110 may be rotatably coupled with the second housing part 120 by the first hinge structure 150. For example, the second housing part 120 may be rotatably coupled to one side of the first housing part 110 by the first hinge structure 150. The second housing part 120 and the first housing part 110 may rotate with respect to the first hinge structure 150. While the first housing part 110 is rotated with respect to the first hinge structure 150, the second housing part 120 is rotated with respect to the first hinge structure 150. For example, when the second housing part 120 and the first housing part 110 are rotated respect to the first hinge structure 150, the angular displacement (or angular change) of the second housing part 120 may be substantially equal to the angular displacement of the first housing part 110.

The third housing part 130 may be rotatably coupled with the second housing part 120 by the second hinge structure 160. The second housing part 120 and the third housing part 130 may rotated with respect to the second hinge structure 160. While the second housing part 120 is rotated with respect to the second hinge structure 160, the third housing part 130 is rotated with respect to the second hinge structure 160. For example, when the second housing part 120 and the third housing part 130 are rotated with respect to the second hinge structure 160, the angular displacement of the second housing part 120 may be substantially equal to the angular displacement of the third housing part 130.

The first hinge structure 150 and the second hinge structure 160 may change a state of the electronic device 100.

The first hinge structure 150 and the second hinge structure 160 may provide (or enable) a first state 100a of the electronic device 1000 (or the first state 100a of the housing structure 101). The first state 100a of the electronic device 1000 (or the first state 100a of the housing structure 101) may be described as an open state (or an unfolded state) of the electronic device 1000 (or the housing structure 101). For example, in the first state 100a, the first housing part 110, the second housing part 120, and the third housing part 130 may be unfolded. For example, in the first state 100a, the first housing part 110 and the second housing part 120 may form an angle of approximately 180 degrees, and the second housing part 120 and the third housing part 130 may form the angle of approximately 180 degrees. In the first state 100a, a front surface of the first housing part 110, a front surface of the second housing part 120, and a front surface of the third housing part 130 may define a front surface of the electronic device 1000. In the first state 100a, the front surface of the first housing part 110, the front surface of the second housing part 120, and the front surface of the third housing part 130 may face the same direction. In the first state 100a, the electronic device 1000 may provide a user with a larger display area of the flexible display 140.

The first hinge structure 150 and the second hinge structure 160 may provide a second state 100b of the electronic device 1000 (or the second state 100b of the housing structure 101). The second state 100b of the electronic device 1000 (or the second state 100b of the housing structure 101) may be described as a closed state (or a folded state, a folding state, or a multi-folded state) of the electronic device 1000 (or the housing structure 101). For example, in the second state 100b, the first housing part 110, the second housing part 120, and the third housing part 130 may be folded. For example, in the second state 100b, the first housing part 110 and the second housing part 120 may form an angle of approximately zero to 10 degrees, and the second housing part 120 and the third housing part 130 may form the angle of approximately zero to 10 degrees. In the second state 100b, the front surface of the first housing part 110 and the front surface of the second housing part 120 may face opposite directions, and the front surface of the second housing part 120 and the front surface of the third housing part 130 may face the opposite directions. In the second state 100b, the front surface of the first housing part 110 and the front surface of the third housing part 130 may face the same direction. For example, in the second state 100b, the front surface of the second housing part 120 may face the front surface of the first housing part 110, and the front surface of the third housing part 130 may face a rear surface of the first housing part 110. In the second state 100b, a rear surface of the second housing part 120 may be externally exposed. The display 170 may be disposed on the rear surface of the second housing part 120. In the second state 100b, a rear surface of the third housing part 130 may be externally exposed. A camera 175 may be disposed on the rear surface of the third housing part 130. In the second state 100b, the electronic device 1000 may be closed (or folded) to enhance portability and provide visual information through the display 170 disposed on the rear side of the second housing part 120.

The electronic device 1000 may further include a key button 139. The key button 139 may be exposed from a structure (e.g., opening) formed on the lateral surface of the third housing part 130 and may partially protrude outward from the electronic device 1000. The key button 139 may provide a physical input to processing circuitry in the electronic device 1000 by a pressure transmitted from the outside. The key button 139 may be implemented in another form, such as a soft key displayed on the flexible display 140 or the display 170, rather than being included in the electronic device 1000.

The key button 139 may be disposed on the lateral surface of the third housing part 130 to be exposed to the outside in the second state 100b. As the key button 139 is disposed on the lateral surface of the third housing part 130, the key button 139 may be disposed in a direction in which the lateral surface of the third housing part 130 faces. A position of the key button 139 disposed on the lateral surface of the third housing 130 may not be moved even if it is changed from the second state 100b to the first state 100a by the user looking at the display 170. For example, referring to FIG. 1A, the key button 139 may be disposed on the right side if the flexible display 140 is viewed from above in the first state 100a. Referring to FIG. 1B, the key button 139 may be disposed on the right side if the display 170 is viewed from above in the second state 100b.

The first hinge structure 150 and the second hinge structure 160 may provide a third state 100c of the electronic device 1000. The third state 100c of the electronic device 1000 may be described as a partially folded and partially unfolded state of the electronic device 1000 (or a single-folded state or a half-folded state). For example, in the third state 100c, the front surface of the second housing part 120 and the front surface of the third housing part 130 may face the same direction, and the front surface of the first housing part 110 and the front surface of the second housing part 120 may face the opposite directions. For example, in the third state 100c, the first housing part 110 and the second housing part 120 may be folded, and the second housing part 120 and the third housing part 130 may be unfolded. For example, in the third state 100c, the first housing part 110 and the second housing part 120 may form the angle of approximately zero to 10 degrees, and the second housing part 120 and the third housing part 130 may form the angle of approximately 180 degrees. In the third state 100c, the electronic device 1000 may provide the visual information through a portion of the flexible display 140 (e.g., third display area 140c).

The electronic device 1000 may be changed from the first state 100a to the second state 100b through the third state 100c. The electronic device 1000 may be changed from the first state 100a, which is the unfolded state, to the third state 100c, which is the partially unfolded state. For example, the electronic device 1000 may be changed from the first state 100a, in which the first housing part 110, the second housing part 120, and the third housing part 130 face the same direction, to the third state 100c, in which the front surface of the first housing part 110 faces the front surface of the second housing part 120. The electronic device 1000 may be changed from the third state 100c, which is the partially unfolded state, to the second state 100b, which is the closed (or folded) state. For example, if the electronic device 1000 is changed from the third state 100c to the second state 100b, the closed first and second housing parts 110 and 120 may be placed on the third housing part 130.

The flexible display 140 may at least partially define an exterior of the electronic device 1000. The flexible display 140 may be partially disposed in the housing structure 101. The flexible display 140 may define the front surface of the electronic device 1000. The flexible display 140 may include a first unbendable portion 141, a second unbendable portion 142, a third unbendable portion 143, a first bendable portion 144, and a second bendable portion 145. The first unbendable portion 141 of the flexible display 140 may be disposed on the front surface of the first housing part 110. The second unbendable portion 142 of the flexible display 140 may be disposed on the front surface of the second housing part 120. The third unbendable portion 143 of the flexible display 140 may be disposed on the front surface of the third housing part 130. The first bendable portion 144 of the flexible display 140 may be disposed between the first and third unbendable portions 141 and 143 of the flexible display 140. For example, the first bendable portion 144 of the flexible display 140 may be disposed on the first hinge structure 150 connecting the first housing part 110 to the second housing part 120. The second bendable portion 145 of the flexible display 140 may be disposed between the second and third unbendable portions 142 and 143 of the flexible display 140. For example, the second bendable portion 145 of the flexible display 140 may be disposed on the second hinge structure 160 connecting the second housing part 120 to the third housing part 130.

The first hinge structure 150 and the second hinge structure 160, the first unbendable portion 141 of the flexible display 140, the second unbendable portion 142 of the flexible display 140, and the third unbendable portion 143 of the flexible display 140 may face substantially the same direction. In the first state 100a, the first bendable portion 144 and the second bendable portion 145 may be disposed in substantially the same horizontal plane as the first unbendable portion 141, the second unbendable portion 142, and the third unbendable portion 143.

The first hinge structure 150 and the second hinge structure 160 may provide the second state 100b of the electronic device 1000. In the second state 100b, the second unbendable portion 142 of the flexible display 140 may face the first unbendable portion 141 of the flexible display 140, and the third unbendable portion 143 of the flexible display 140 may face the rear surface of the first housing part 110.

In the second state 100b, the first bendable portion 144 of the flexible display 140 may be bent by the first hinge structure 150, thus folding the first bendable portion 144 of the flexible display 140 to allow the first unbendable portion 141 of the flexible display 140 and the second unbendable portion 142 of the flexible display 140 to face different directions.

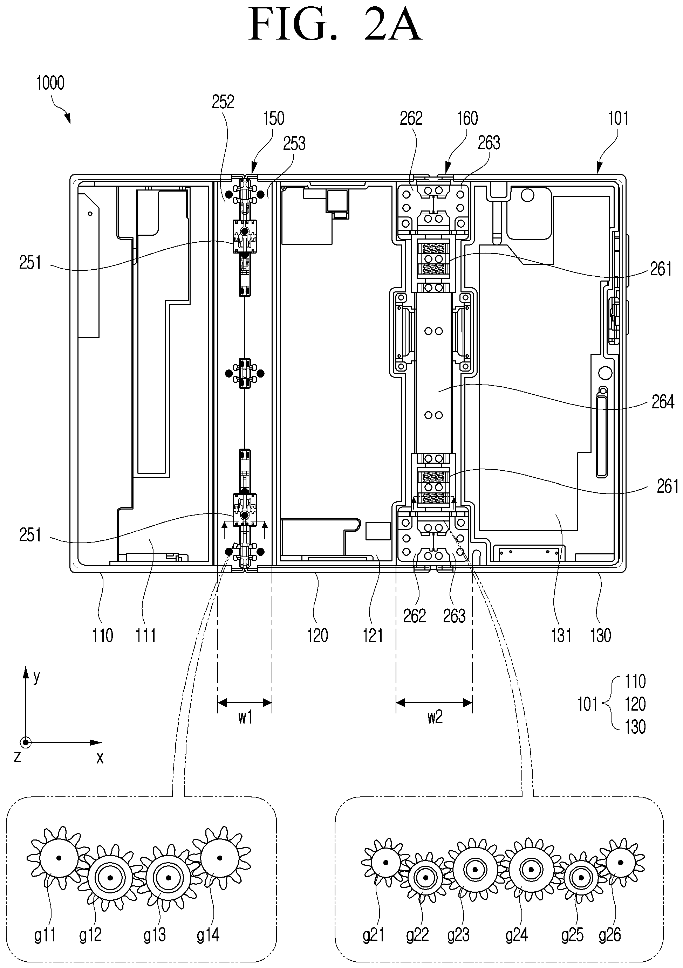

In the second state 100b, the second bendable portion 145 of the flexible display 140 may be bent by the second hinge structure 160, thus folding the second bendable portion 145 of the flexible display 140 to allow the second unbendable portion 142 of the flexible display 140 and the third unbendable portion 143 of the flexible display 140 to face different directions. The second bendable portion 145 may further include a first deformable portion 145a, a second deformable portion 145b, and a flat portion 145c. The first deformable portion 145a may be disposed between the flat portion 145c and the second unbendable portion 142, and the second deformable portion 145b may be disposed between the flat portion 145c and the third unbendable portion 143. The flat portion 145c may be disposed between the first deformable portion 145a and the second deformable portion 145b. The flat portion 145c may be supported by a support plate (e.g., support plate 264 in FIG. 2A) that is distinct from the hinge plates (e.g., third hinge plate 262 and fourth hinge plate 263 in FIG. 2A) of the second hinge structure 160. The flat portion 145c may remain a flat surface regardless of the state of the electronic device 1000. The first deformable portion 145a and the second deformable portion 145b may be unfolded in the first state 100a or the third state 100c, and in the second state 100b, the first deformable portion 145a and the second deformable portion 145b may be bent to allow the second unbendable portion 142 and the third unbendable portion 143 to face the different directions. In the second state 100b, the first housing part 110 may be disposed between the second housing part 120 and the third housing part 130. In the second state 100b, the second bendable portion 145 of the flexible display 140 disposed on the second hinge structure 160 may partially face a lateral side 110c of the first housing part 110.

The first hinge structure 150 and the second hinge structure 160 may provide the third state 100c of the electronic device 1000. In the third state 100c, the first unbendable portion 141 of the flexible display 140 may face the second unbendable portion 142 of the flexible display 140, and the third unbendable portion 143 of the flexible display 140 may face the same direction as the second unbendable portion 142 of the flexible display 140. For example, the second unbendable portion 142 and the third unbendable portion 143 may be disposed in substantially the same horizontal plane.

In the third state 100c, the first bendable portion 144 of the flexible display 140 may be bent by the first hinge structure 150, thus folding the first bendable portion 144 of the flexible display 140 to allow the first unbendable portion 141 of the flexible display 140 and the second unbendable portion 142 of the flexible display 140 to face the different directions.

In the third state 100c, the second bendable portion 145 of the flexible display 140 may remain in the unfolded state by the second hinge structure 160, thereby unfolding the second bendable portion 145 of the flexible display 140 to allow the second unbendable portion 142 of the flexible display 140 and the third unbendable portion 143 of the flexible display 140 to face the same direction.

The display region of the flexible display 140 may include a first display region 140a, a second display region 140b, and the third display region 140c. The display region represents a region where the visual information may be provided through the flexible display 140. In the first state 100a, the entire display region of the flexible display 140 may be visible from the front side of the housing structure 101. For example, in the first state 100a, the first, second, and third display regions 140a, 140b, and 140c of the flexible display 140 may be visually exposed. The electronic device 1000 may provide the user with the large display region including the first display region 140a, the second display region 140b, and the third display region 140c.

In the second state 100b, the display region of the flexible display 140 may not be visible. For example, in the second state 100b, the first, second, and third display regions 140a, 140b, and 140c of the flexible display 140 may not be visually exposed.

In the third state 100c, the display region of the flexible display 140 may be partially visible from the front side of the third housing part 130. For example, the third display region 140c may be visually exposed, while the first display region 140a and the second display region 140b may not be visually exposed.

As a non-limiting example, if the flexible display 140 is used to display a screen in the first state 100a of the electronic device 1000, the first, second, and third display regions 140a, 140b, and 140c of the flexible display 140 may be activated. As a non-limiting example, in the second state 100b, the first, second, and third display regions 140a, 140b, and 140c of the flexible display 140 may be deactivated. As a non-limiting example, if the flexible display 140 is used to display the screen in the third state 100c of the electronic device 1000, the third display region 140c of the flexible display 140 may be activated, while the first display region 140a and the second display region 140b may be deactivated.

As a non-limiting example, if the flexible display 140 is used to display the screen in the first state 100a of the electronic device 1000, the first, second, and third display regions 140a, 140b, and 140c of the flexible display 140 may display the visual information. As a non-limiting example, in the second state 100b, the first, second, and third display regions 140a, 140b, and 140c of the flexible display 140 may provide a black image. As a non-limiting example, if the flexible display 140 is used to display the screen in the third state 100c of the electronic device 1000, the third display region 140c of the flexible display 140 may provide the visual information, while the first display region 140a and the second display region 140b may provide the black image.

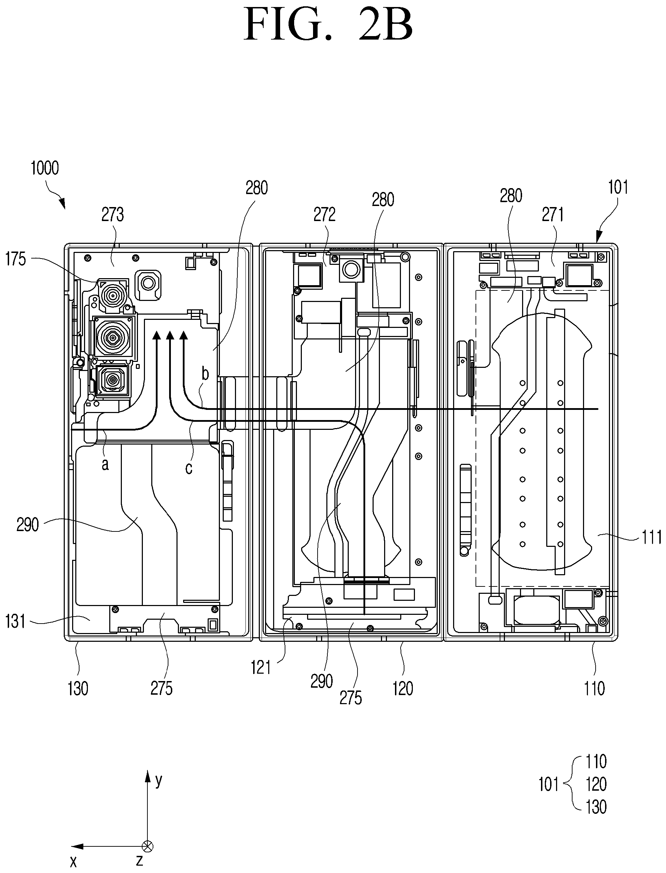

FIG. 2A is a plan view of the electronic device from which the flexible display is removed according to an embodiment of the present disclosure. FIG. 2B is a rear review of the electronic device from which a rear cover and the display are removed according to an embodiment of the present disclosure.

Referring to FIGS. 2A and 2B, the electronic device 1000 may include the first hinge structure 150 and the second hinge structure 160. A first width w1 of the first hinge structure 150 may be smaller than a second width w2 of the second hinge structure 160. A difference between the first width w1 of the first hinge structure 150 and the second width w2 of the second hinge structure 160 may be equal to or greater than a thickness of the first housing part 110. For example, the second hinge structure 160 may have the second width w2 greater than the first width w1 to allow the first housing part 110 to be disposed between the second housing part 120 and the third housing part 130 in the second state 100b. The first hinge structure 150 may be referred to as a narrow hinge structure because the first hinge structure 150 has a smaller width than that of the second hinge structure 160. The second hinge structure 160 may be referred to as a wide hinge structure because the second hinge structure 160 has a greater width than that of the first hinge structure 150.

The first hinge structure 150 may include a first gear set 251, a first hinge plate 252, and a second hinge plate 253. The first hinge plate 252 may be coupled to a first support portion 111 of the first housing part 110. The second hinge plate 253 may be coupled to a second support portion 121 of the second housing part 120. Gears g11, g12, g13, and g14 included in the first gear set 251 may be configured to pivot each of the first hinge plate 252 and the second hinge plate 253. For example, the gears g11, g12, g13, and g14 included in the first gear set 251 may allow the second hinge plate 253 (or the second housing part 120) to be pivoted in conjunction with the pivoting of the first hinge plate 252 (or the first housing part 110). After the first hinge plate 252 (or the first housing part 110) is pivoted, the gears g11, g12, g13, and g14 included in the first gear set 251 may rotate in conjunction with the pivoting of the first hinge plate 252 (or the first housing part 110). The second hinge plate 253 (or the second housing part 120) may be pivoted in conjunction with the pivoting of the first hinge plate 252 by the rotation of the gears included in the first gear set 251. The gears g11, g12, g13, and g14 included in the first gear set 251 may include the first gear g11, the second gear g12, the third gear g13, and the fourth gear g14. The first gear g11 may be disposed to be adjacent to the first hinge plate 252, and the fourth gear g14 may be disposed to be adjacent to the second hinge plate 253. The second gear g12 and the third gear g13 may be disposed between the first gear g11 and the fourth gear g14. The first gear g11, the second gear g12, the third gear g13, and the fourth gear g14 may be sequentially meshed with one another. As the first gear g11 rotates in a first rotation direction (e.g., clockwise), the second gear g12, meshed with the first gear g11, may rotate in a second rotation direction (e.g., counterclockwise) opposite to the first rotation direction. As the second gear g12 rotates in the second rotation direction, the third gear g13 meshed with the second gear g12 may rotate in the first rotation direction. As the third gear g13 rotates in the first rotation direction, the fourth gear g14 may rotate in the second rotation direction. As the first gear g11 and the fourth gear g14 rotate in the different directions, the first housing part 110 connected to the first hinge plate 252 and the second housing part 120 connected to the second hinge plate 253 may be folded or unfolded, respectively.

The second hinge structure 160 may include a second gear set 261, the third hinge plate 262, the fourth hinge plate 263, and the support plate 264. The third hinge plate 262 may be coupled to the second support portion 121 of the second housing part 120. The fourth hinge plate 263 may be coupled to a third support portion 131 of the third housing part 130. Gears g21, g22, g23, g24, g25, and g26 included in the second gear set 261 may be configured to pivot each of the third hinge plate 262 and the fourth hinge plate 263. For example, the gears g21, g22, g23, g24, g25, and g26 included in the second gear set 261 may allow the fourth hinge plate 263 (or the third housing part 130) to be pivoted in conjunction with the pivoting of the third hinge plate 262 (or the second housing part 120). After the third hinge plate 262 (or the second housing part 120) is pivoted, the gears g21, g22, g23, g24, g25, and g26 included in the second gear set 261 may rotate in conjunction with the pivoting of the third hinge plate 262 (or the second housing part 120). The fourth hinge plate 263 (or the third housing part 130) may be pivoted in conjunction with the pivoting of the third hinge plate 262 due to the rotation of the gears g21, g22, g23, g24, g25, and g26 included in the second gear set 261.

The gears g21, g22, g23, g24, g25, and g26 included in the second gear set 261 may include the first gear g21, the second gear g22, the third gear g23, the fourth gear g24, the fifth gear g25, and the sixth gear g26. The first gear g21 may be disposed to be adjacent to the third hinge plate 262, and the sixth gear g26 may be disposed to be adjacent to the fourth hinge plate 263. The second gear g22, the third gear g23, the fourth gear g24, and the fifth gear g25 may be arranged between the first gear g21 and the sixth gear g26. The first gear g21, the second gear g22, the third gear g23, the fourth gear g24, the fifth gear g25, and the sixth gear g26 may be sequentially meshed with one another. As the first gear g21 rotates in the first rotation direction (e.g., clockwise), the second gear g22 meshed with the first gear g21 may rotate in the second rotation direction (e.g., counterclockwise) opposite to the first rotation direction. As the second gear g22 rotates in the second rotation direction, the third gear g23 meshed with the second gear g22 may rotate in the first rotation direction. As the third gear g23 rotates in the first rotation direction, the fourth gear g24 may rotate in the second rotation direction. As the fourth gear g24 rotates in the second rotation direction, the fifth gear g25 meshed with the fourth gear g24 may rotate in the first rotation direction. As the fifth gear g25 rotates in the first rotation direction, the sixth gear g26 meshed with the fifth gear g25 may rotate in the second rotation direction. As the first gear g21 and the sixth gear g26 rotate in the different directions, the second housing part 120 connected to the third hinge plate 262 and the third housing part 130 connected to the fourth hinge plate 263 may be folded or unfolded, respectively.

Each of the first hinge structure 150 and the second hinge structure 160 may further include a spiral structure. The spiral structure may include a helical spiral groove formed in each hinge plate or a pivoting member connected to the hinge plate and a sliding member that slides along the spiral groove. The hinge plates connected to the hinge structure may be configured to be pivoted at substantially the same angular displacement by using the spiral structure.

The electronic device 1000 may include a first printed circuit board 271, a second printed circuit board 272, and a third printed circuit board 273.

The first printed circuit board 271 may be disposed on the first support portion 111 of the first housing part 110. A hardware component included in the first housing part 110 may be mounted on the first printed circuit board 271. The second printed circuit board 272 may be disposed on the second support portion 121 of the second housing part 120. The third printed circuit board 273 may be disposed on the third support portion 131 of the third housing part 130. A hardware component included in the third housing part 130 may be mounted on the third printed circuit board 273.

The hardware component disposed on the first printed circuit board 271 may support or operate independently of the hardware component disposed on the second printed circuit board 272 and/or the hardware component disposed on the third printed circuit board 273.

The hardware component disposed on the second printed circuit board 272 may support or operate independently of the hardware component disposed on either the first printed circuit board 271 or the third printed circuit board 273. The hardware component disposed on the second printed circuit board 272 may include a speaker, a front camera, and/or a display driving circuit.

The hardware component disposed on the third printed circuit board 273 may include at least one processor (e.g., application processor (AP) or communication processor (CP)) including a processing circuit, a memory including at least one storage medium, a communication circuit, and the rear camera 175. The rear camera 175 may be exposed through a structure (e.g., opening) formed in the rear surface of the third housing part 130.

The electronic device 1000 may further include a sub-printed circuit board 275 and flexible printed circuit boards 280 and 290. The sub-printed circuit board 275 may be disposed on at least a portion of the first, second, or third housing part 110, 120, or 130. The flexible printed circuit boards 280 and 290 may include the first flexible printed circuit board 280 and the second flexible printed circuit board 290. The first flexible printed circuit board 280 may electrically connect the respective printed circuit boards disposed in the housing parts 110, 120, and 130 to one another. The second flexible printed circuit board 290 may connect the sub-printed circuit board 275 to the printed circuit board (for example, the first printed circuit board 271, the second printed circuit board 272, or the third printed circuit board 273) disposed in the housing part where the sub-printed circuit board 275 is disposed.

Components included in the electronic device 1000 may be connected to at least one processor included in the third printed circuit board 273 via the flexible printed circuit boards 280 and 290. For example, a signal received through an antenna disposed in the third housing part 130 may be transmitted to the third printed circuit board 273, where at least one processor (e.g., AP or CP) is disposed, via a signal path a provided by/using the first flexible printed circuit board 280. The driving circuit for the flexible display 140 disposed in the first housing part 110 may be connected to the third printed circuit board 273, where at least one processor (e.g., AP) is disposed, via a signal path b provided by the sub-printed circuit board 275 and the first flexible printed circuit board 280. The driving circuit for the display 170, which is connected to the sub-printed circuit board 275 disposed in the second housing part 130, may be electrically connected to the third printed circuit board 273, where at least one processor (e.g., AP) is disposed, via a signal path c provided by the sub-printed circuit board 275, the first flexible printed circuit board 280, and the second flexible printed circuit board 290.

The electronic device 1000 may further include batteries. The batteries may be attached to the support portions 111, 121, and 131 included in the housing parts 110, 120, and 130, respectively. The support portions 111, 121, and 131 may support rechargeable batteries.

The arrangement of the hardware components is exemplary, and unlike the arrangement described above, the rear camera 175 and the third printed circuit board 273 may be disposed in the second housing part 120, and the second printed circuit board 272 may be disposed in the third housing part 120.

The first housing part 110 and the third housing part 130 are shown as being pivoted in the opposite directions relative to the second housing part 120, and are not limited thereto. For example, while the electronic device 1000 switches from the first state 100a to the second state 100b, the first housing part 110 may be pivoted counterclockwise relative to the second housing part 120, and the third housing part 130 may be pivoted counterclockwise relative to the second housing part 120. As the first housing part 110 and the third housing part 130 are pivoted in the same direction, a portion of the display region of the flexible display 140 may be visually exposed in the second state.

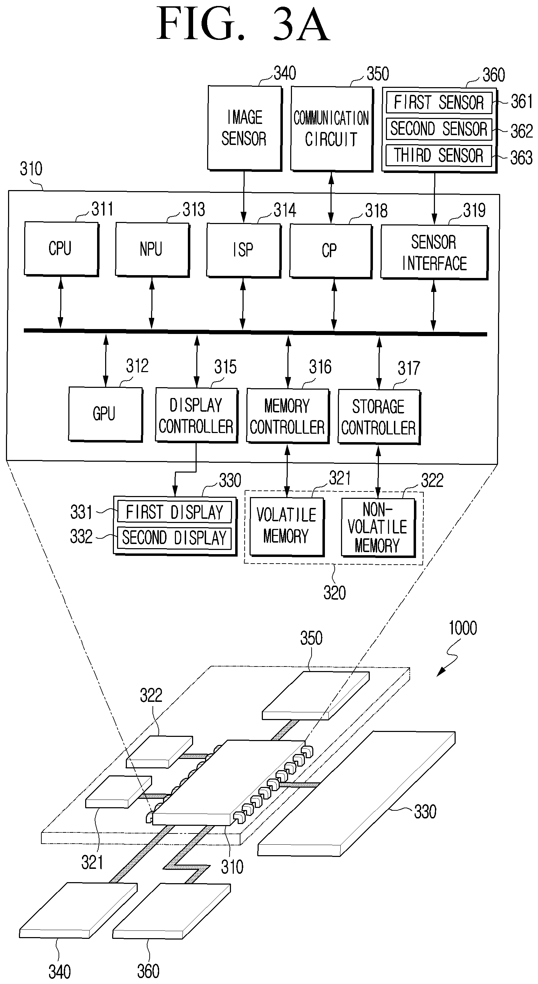

FIG. 3A is a block diagram of the exemplary electronic device capable of performing operations described in the present disclosure.

Referring to FIG. 3A, the electronic device 1000 may be the electronic device such as a foldable-type smartphone. For example, the electronic device 1000 may be a foldable-type device that may provide the folded state, the half-folded state, and the unfolded state by using two hinge structures 150 and 160. Such a device may also be referred to as a multi-foldable device or a multi-folding device. Components illustrated in FIG. 3A, their relationships, and their functions are only exemplary, and do not limit the implementations described or claimed in the present disclosure. The electronic device 1000 may be referred to as a mobile device, a user device, a multi-function device, or a portable device.

The electronic device 1000 may include the components including at least one processor 310 (hereinafter, referred to as the processor 310), at least one memory 320 (hereinafter, referred to as the memory 320), at least one display 330 (hereinafter, referred to as the display 330), at least one image sensor 340 (hereinafter, referred to as the image sensor 340), at least one communication circuit 350 (hereinafter, referred to as the communication circuit 350), and/or at least one sensor 360 (hereinafter, referred to as the sensor 360).

The components illustrated in FIG. 3A are only exemplary. The type and/or number of hardware included in the electronic device 1000 are not limited to those illustrated in FIG. 3A. For example, the electronic device 1000 may include other components (e.g., power management integrated circuitry (PMIC), audio processing circuit, antenna, rechargeable battery, or input/output interface). For example, some components may be omitted from the electronic device 1000. For example, some components may be integrated into one component.

The processor 310 may be implemented as at least one integrated circuit (or circuitry (IC)) chip and execute various data processing. The processor 310 may include at least one electrical circuit, and individually or collectively distribute and process instructions (or programs, data, or the like) stored in the memory 320. The processor 310 may include a processor assembly including at least one processing circuit. The processor 310 may include any processing circuit operative to control the performance and operations of at least one component of the electronic device 1000 (e.g., memory 320, display 330, image sensor 340, communication circuit 350, and/or sensor 360). For example, the processor 310 (e.g., AP) may be implemented as a system on chip (SoC) (e.g., one chip or chipset). For example, the processor 310 may be implemented as multiple cores (or at least one core circuit), multiple chips, or multiple chipsets. For example, the processor 310 may include at least one processing circuit. For example, the processor 310 may include at least one processing circuit configured to individually and/or collectively perform various functions in the present disclosure. As a non-limiting example, at least a portion of the processor 310 may be included in a first chip of the electronic device 1000, and at least another portion of the processor 310 may be included in a second chip of the electronic device 1000 that is different from the first chip of the electronic device 1000.

For example, the processor 310 may include a central processing unit (CPU) 311, a graphics processing unit (GPU) 312, a neural processing unit (NPU) 313, an image signal processor (ISP) 314, a display controller 315, a memory controller 316, a storage controller 317, a communication processor (CP) 318, and/or a sensor interface 319. These components of the processor 310 are only exemplary. For example, the processor 310 may further include other components. For example, some components of the processor 310 may be omitted from the processor 310. For example, some components of the processor 310 may be included as separate components of the electronic device 1000 outside of the processor 310. For example, some components of the processor 310 (e.g., memory controller 316) may be included in other components (for example, at least a portion of the memory 320, an interface (e.g., available for connection to at least one component of the electronic device 1000), the display 330, and/or the image sensor 340).

The processor 310 may cause other components of the electronic device 1000 to perform the various operations by executing the instructions stored in the memory 320.

The central processing circuit (CPU) 311 may be configured to control the components of the processor 310 by executing the instructions stored in the memory 320 (e.g., volatile memory 321 and/or non-volatile memory 322). The graphics processing circuit (GPU) 312 may be configured to execute parallel computations (e.g., rendering). The neural processing circuit (NPU) 313 (or artificial intelligence (AI) chip) may be configured to execute computations for an artificial intelligence model (e.g., convolution computation). The image signal processing circuit (ISP) 314 may be configured to process a raw image acquired through the image sensor 340 into a format suitable for the component included in the electronic device 1000 or the component of the processor 310. The display controller 315 (or a display control circuit or a display processing unit (DPU)) may be configured to process an image acquired from the CPU 311, the GPU 312, the ISP 314, or the memory 320 (e.g., volatile memory 321) into a format suitable for the display 330. The memory controller 316 (or memory control circuit) may be configured to control reading data from the volatile memory 321 and writing data to the volatile memory 321. The storage controller 317 (or a storage control circuit) may be configured to control reading data from the non-volatile memory 322 and writing data to the non-volatile memory 322. The communication processing circuit (CP) 318 may be configured to process data acquired from the component of the processor 310 into a format suitable for transmission to another the electronic device via the communication circuit 350, or to process data acquired from another electronic device via the communication circuit 350 into a format suitable for processing by the component of the processor 310. For example, the communication circuit 350 may include at least one communication circuit. The sensor interface 319 (or a sensing data processing circuit or a sensor hub) may be configured to process data on the state of the electronic device and/or a surrounding state of the electronic device 1000, acquired through the sensor 360, into the format suitable for the components of the processor 310.

The memory 320 may include at least one storage medium (or at least one storage device). For example, the memory 320 may include a memory assembly including at least one storage medium. For example, at least one storage medium may include a permanent memory (e.g., non-volatile memory 322), such as a hard drive, a flash memory, or a read-only memory (ROM), a semi-permanent memory (e.g., volatile memory 321), such as a random access memory (RAM), any other suitable type of storage (or storage assembly), or any combination thereof. The memory 320 may include a cache memory, which is at least one type of memory different from others and used to temporarily store data for a function or feature of the electronic device 1000. As a non-limiting example, the cache memory may be included in the processor 310. The memory 320 may be fixedly embedded in the electronic device 1000 or incorporated into at least one suitable type of component (for example, a subscriber identity module (SIM) card and/or a secure digital (SD) card) that is repeatedly inserted into and removable from the electronic device 1000.

For example, the memory 320 may store at least one software application, such as an operating system (or system) software application, a firmware software application, a driver software application, a plug-in (e.g., add-in, add- on, and/or applet) software application, and/or any other suitable software applications. For example, at least one software application may include instructions executable by the processor 310. For example, the memory 320 may store instructions that may be invoked by an application programming interface (API). For example, the memory 320 may store the instructions in the library.

The display 330 may be controlled by the processor 310 and output visualized information to the user. According to an embodiment, the display 330 may include a touch sensor configured to detect a touch, or a pressure sensor configured to measure a magnitude of a force generated by the touch.

The display 330 may include a first display 331 and a second display 332. The first display 331 may include the flexible display 140 having bendable or flexible characteristics. For example, the flexible display 140 may be implemented as an organic light-emitting diode (OLED) display, electronic paper, or the like. The second display 332 may include a flat panel display (FPD). The FPD may include a liquid crystal display (LCD), a plasma display panel (PDP), and/or at least one light emitting diode (LED) display. The LED may include the organic LED (OLED).

The first display 331 may be disposed on one surface that extends across the first housing part 110, the second housing part 120, and the third housing part 130 while spanning the first hinge structure 150 and the second hinge structure 160. For example, the first display 331 in FIG. 3A may include the flexible display 140 shown in FIGS. 1A to 1C.

The second display 332 may be disposed on the other surface of the second housing part 120. For example, the second display 332 in FIG. 3A may include the display 170 shown in FIGS. 1A to 1C.

The communication circuit 350 may include a hardware component for supporting the transmission and/or reception of an electrical signal between the electronic device 1000 and an external electronic device (e.g., server device or another electronic device). For example, the communication circuit 350 may include at least one of a modulatordemodulator (MODEM), an antenna, and an optical/electronic (O/E) converter. The communication circuit 350 may support the transmission and/or reception of the electrical signal based on various types of protocols such as Ethernet, local area network (LAN), wide area network (WAN), Wireless Fidelity (Wi-Fi), Bluetooth, Bluetooth Low Energy (BLE), Zigbee, Long Term Evolution (LTE), 5G New Radio (NR), and/or Sixth Generation (6G).

The sensor 360 may generate electrical information that may be processed by the processor 310 and/or the memory 320 based on non-electronic information related to the electronic device 1000. The information may be referred to as sensor data. For example, the sensor 360 may detect the operating state of the electronic device 1000 or an external environmental state, and generate the electrical information corresponding to the detected state. For example, the sensor 360 may include a global positioning system (GPS) sensor, an illuminance sensor, and/or a time-of-flight (ToF) sensor.

The sensor 360 may include at least one first sensor 361 (hereinafter, referred to as the first sensor 361) and at least one second sensor 362 (hereinafter, referred to as the second sensor 362) for detecting the state of the electronic device 1000. For example, the state of the electronic device 1000 may include the closed state (or folded state) of the housing parts 110, 120, and 130 and/or the unfolded state, or a folding angle among the housing parts 110, 120, and 130.

According to an embodiment, the sensor 360 may include at least one third sensor 363 (hereinafter, referred to as the third sensor 363). For example, the third sensor 363 may include a gyro sensor. According to an embodiment, the gyro sensor may include a 3-axis gyro sensor, and may include at least three gyros for detecting a rotation angle around each of X, Y, and Z axes, and at least three acceleration sensors for detecting accelerations of each of the X, Y, and Z axes.

According to an embodiment, the third sensor 363 may detect a rotation of the electronic device 1000. For example, the third sensor 363 may detect an angular velocity based on a Coriolis force generated during the rotation of the electronic device 1000, and may detect the rotation angle or tilt of the rotating electronic device 1000.

However, the sensor 360 is not limited thereto, and may include an accelerometer, a magnetometer, or an optical sensor. For example, the accelerometer may detect the tilt of the rotating electronic device 1000, the magnetometer may detect a change in a direction (or orientation) of the electronic device 1000 that rotates using a magnetic field, and the optical sensor may detect a movement (e.g., rotation angle or tilt) of the electronic device 1000 based on a change in a surrounding environment of the rotating electronic device 1000.

According to an embodiment, the processor 310 may identify a display mode of the electronic device 1000 based on its rotation angle, tilt, change in direction, or the like, as detected through the sensor 360.

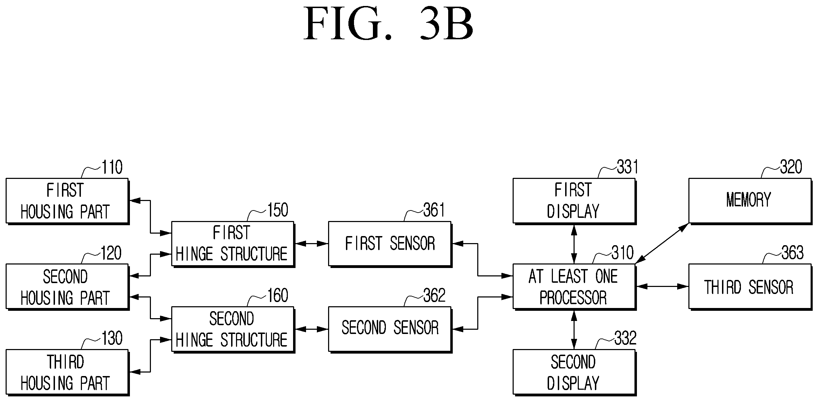

FIG. 3B is a block diagram of the exemplary electronic device capable of performing the operations described in the present disclosure.

A description provided with reference to FIG. 3B omits the redundant content described with reference to FIG. 3A.

According to an embodiment, the processor 310 may perform the operations of the electronic device 1000 according to the various embodiments by executing at least one instruction stored in the memory.

According to an embodiment, the processor 310 may be implemented as a digital signal processor (DSP), a microprocessor, or a timing controller (TCON), which processes digital signals. However, the processor 310 is not limited thereto, may include at least one of the central processing unit (CPU), a micro controller unit (MCU), a micro processing unit (MPU), a controller, the application processor (AP), the communication processor (CP), an advanced RISC machine (ARM) processor or an artificial intelligence (AI) processor, or may be defined by such a term. In addition, the processor 310 may be implemented in a system-on-chip (SoC) or a large scale integration (LSI), in which a processing algorithm is embedded, or may be implemented in the form of a field programmable gate array (FPGA). The processor 310 may perform the various functions by executing computer-executable instructions stored in the memory 320.

The processor 310 may include at least one of the central processing unit (CPU), the graphics processing unit (GPU), an accelerated processing unit (APU), a many integrated core (MIC), the digital signal processor (DSP), the neural processing unit (NPU), a hardware accelerator, or a machine learning accelerator. The one processor 310 may control one or any combination of other components of the electronic device and perform an operation related to communication or data processing. The processor 310 may execute at least one program or instruction stored in the memory 320. For example, the processor 310 may perform a method according to an embodiment of the present disclosure by executing at least one instruction stored in the memory 320.

If the method according to an embodiment of the present disclosure includes a plurality of operations, the plurality of operations may be performed by one processor, or may be performed by a plurality of processors. For example, a first operation, a second operation, and a third operation may be performed by the method according to an embodiment. In this case, the first operation, the second operation, and the third operation may all be performed by a first processor. Alternatively, the first operation and the second operation may be performed by the first processor (for example, a general-purpose processor), and the third operation may be performed by a second processor (for example, an artificial intelligence-only processor).

The processor 310 may be implemented as a single-core processor including a single core, or may be implemented as at least one multi-core processor including multi-cores (e.g., homogeneous multi-cores or heterogeneous multi-cores). If the processor 310 is implemented as the multi-core processor, each of the multi-cores included in the multi-core processor may include an internal memory of the processor, such as a cache memory or an on-chip memory, and a common cache shared by the multi-cores may be included in the multi-core processor. In addition, each (or some) of the multi-cores included in the multi-core processor may independently read and perform a program instruction for implementing the method according an embodiment of the present disclosure, or all (or some) of the multi cores may be linked with each other to read and perform the program instruction for implementing the method according to an embodiment of the present disclosure.

If the method according to an embodiment of the present disclosure includes a plurality of operations, the plurality of operations may be performed by one core among the multi-cores included in the multi-core processor, or may be performed by the multi-cores. For example, the first operation, the second operation, and the third operation may be performed by the method according to an embodiment. In this case, the first operation, the second operation, and the third operation may all be performed by a first core included in the multi-core processor. Alternatively, the first operation and the second operation may be performed by the first core included in the multi-core processor, and the third operation may be performed by a second core included in the multi-core processor.

In the embodiments of the present disclosure, the processor may indicate a system-on-chip (SoC) in which the processor and other electronic components are integrated with each other, the single-core processor, the multi-core processor, or a core included in the single-core processor or the multi-core processor. Here, the core may be implemented as the CPU, the GPU, the APU, the MIC, the DSP, the NPU, the hardware accelerator, or the machine learning accelerator. However, the embodiments of the present disclosure are not limited thereto.

According to an embodiment, the processor 310 may control at least one of the first display 331 or the second display 332 to display a user interface (UI) for setting the display mode of the electronic device 1000.

According to an embodiment, if the user input for setting the display mode of the electronic device 1000 to a landscape mode is received through the UI displayed by the first display 331, the processor 310 may fix the display mode of the electronic device 1000 to the landscape mode.

According to an embodiment, the processor 310 may display at least one application in the landscape mode, regardless of the rotation of the electronic device 1000. For example, the processor 310 may display one application based on an aspect ratio of the first display 331 in the landscape mode of the electronic device 1000, or may display a plurality of applications in regions divided from each other along a boundary parallel to a shorter lateral surface (or perpendicular to a longer lateral surface) of the electronic device 1000 in the multi-window mode.

According to an embodiment, the processor 310 may fix the display mode of the electronic device 1000 to a portrait mode if the user input for setting the display mode of the electronic device 1000 to the portrait mode is received through a UI displayed on the first display 331.

According to an embodiment, the processor 310 may display at least one application in the portrait mode, regardless of the rotation of the electronic device 1000. For example, the processor 310 may display one application based on the aspect ratio of the first display 331 in the portrait mode of the electronic device 1000, or may display the plurality of applications in regions divided from each other along a boundary parallel to the longer lateral surface (or parallel to the shorter lateral surface) of the electronic device 1000 in the multi-window mode.

According to an embodiment, the processor 310 may switch the display mode to the landscape mode or the portrait mode based on the rotation of the electronic device 1000 if the user input for setting the display mode of the electronic device 1000 to an automatic rotation mode is received through the UI displayed on the first display 331.

According to an embodiment, the processor 310 may switch the electronic device 1000 to either the landscape mode or the portrait mode if the electronic device 1000 rotates in the automatic rotation mode of the electronic device 1000, and may display the plurality of applications in regions divided from each other along a boundary caused by the partially folded state if at least one of the first housing part 110 or the third housing part 130 is identified as being partially folded in the multi-window mode.

However, the present disclosure is not limited thereto. According to an embodiment, in addition to the landscape mode, the portrait mode, and the automatic rotation mode, the processor 310 may fix the boundary caused by the multi-window mode and provide a mode where the application is rotated based on the rotation of the electronic device 1000 in regions divided from each other along the fixed boundary.

According to an embodiment, the processor 310 may identify whether either the first housing part 110 or the third housing part 130 is partially folded based on a first folding angle detected through the first sensor 361 and a second folding angle detected through the second sensor 362 if the electronic device 1000 is identified as switching from the landscape mode to the portrait mode through the third sensor 363 based on the rotation of the electronic device 1000.

The partially folded state of either the first housing part 110 or the third housing part 130 can be described by the folding angle among the housing parts (e.g., first housing part 110 to third housing part 130). According to an embodiment, the folding angle may be referred to as a folding axis angle or a hinge angle and is referred to as the folding angle below for convenience of description.

For example, the first folding angle may include an angle (e.g., θ1) between the first housing part 110 and the second housing part 120 relative to a folding axis 181 (in FIG. 1A, for example), and the second folding angle may include an angle (e.g., θ2) between the second housing part 120 and the third housing part 130 relative to a folding axis 182 (in FIG. 1A, for example).

The first sensor 361 may be configured to detect the first folding angle between the first housing part 110 and the second housing part 120 under the control of the processor 310. The second sensor 362 may be configured to detect the second folding angle between the second housing part 120 and the third housing part 130 under the control of the processor 310.

For example, the first sensor 361 may include a Hall sensor and/or at least one six-axis sensor. The second sensor 362 may include a Hall sensor and/or at least one six-axis sensor. The six-axis sensor may be disposed in each of the first housing part 110, the second housing part 120 and the third housing part 130. At least one six-axis sensor in the first sensor 361 may include the six-axis sensor disposed in the first housing part 110 or the second housing part 120. At least one six-axis sensor in the second sensor 362 may include the six-axis sensor disposed in the second housing part 120 or the third housing part 130.

The Hall sensor may generate an electrical signal (e.g., voltage) in response to the magnetic field. The Hall sensor may generate the electrical signal having a relatively large intensity if a magnitude of the magnetic field is large, and generate the electrical signal having a relatively small intensity if the magnitude of the magnetic field is small.

For example, the Hall sensor may be disposed near the first hinge structure 150. In an embodiment, the Hall sensor may be disposed in the first housing part 110, and a magnet may be disposed in the second housing part 120. In an embodiment, the Hall sensor may be disposed in the second housing part 120, and the magnet may be disposed in the first housing part 110. The processor 310 may detect the states of the first housing part 110 and the second housing part 120 based on the sensor data received from the Hall sensor. For example, if the first housing part 110 and the second housing part 120 are changed from the unfolded state to the closed state or from the folded state to the unfolded state, the Hall sensor may generate the electrical signal in response to the magnetic field of the magnet. The processor 310 may identify whether the first housing part 110 and the second housing part 120 are in the unfolded state, the closed state, or the partially folded state by using the intensity of the electrical signal received from the Hall sensor.

For example, the Hall sensor may be disposed near the second hinge structure 160. In an embodiment, the Hall sensor may be disposed in the second housing part 120, and the magnet may be disposed in the third housing part 130. In an embodiment, the Hall sensor may be disposed in the third housing part 130, and the magnet may be disposed in the second housing part 120. The processor 310 may detect the states of the second housing part 120 and the third housing part 130 based on the sensor data received from the Hall sensor. For example, if the second housing part 120 and the third housing part 130 are changed from the unfolded state to the folded state or from the folded state to the unfolded state, the Hall sensor may generate the electrical signal in response to the magnetic field of the magnet. The processor 310 may identify whether the second housing part 120 and the third housing part 130 are in the unfolded state, the closed state, or the partially folded state by using the electrical signal received from the Hall sensor.

The six-axis sensor may include the acceleration sensor (e.g., three-axis acceleration sensor) and the gyro sensor (e.g., three-axis gyro sensor). The acceleration sensor may generate the sensor data representing a direction and/or magnitude of acceleration applied to the electronic device 1000 by using a plurality of axes (e.g., x-axis, y-axis, and z-axis) that are perpendicular to one another. The gyro sensor may generate the sensor data representing the angular velocity of the electronic device 1000 about the plurality of axes. The six-axis sensors may be disposed in each of the first housing part 110, the second housing part 120, and the third housing part 130. The processor 310 may identify the tilt and/or pivoting of the first housing part 110 and the second housing part 120 and the first folding angle between the first housing part 110 and the second housing part 120 based on the sensor data received from the six-axis sensors disposed in the first housing part 110 and the second housing part 120, respectively. The processor 310 may identify the tilt and/or pivoting of the second housing part 120 and the third housing part 130 and the second folding angle between the second housing part 120 and the third housing part 130 based on the sensor data received from the six-axis sensors disposed in the second housing part 120 and the third housing part 130, respectively.

According to an embodiment, the processor 310 may identify the state of the electronic device 1000 based on the states of the housing parts 110, 120, and 130.

For example, the processor 310 may identify the electronic device 1000 as being in the second state 100b (in FIG. 1B, for example) based on the first folding angle between the first housing part 110 and the second housing part 120 and the second folding angle between the second housing part 120 and the third housing part 130 being identified as being at a first designated angle (e.g., approximately zero to 10 degrees). In the second state 100b (in FIG. 1B, for example), the first housing part 110, the second housing part 120, and the third housing part 130 may be closed (or folded).

For example, the processor 310 may identify the electronic device 1000 as being in the first state 100a (in FIG. 1A, for example) based on the first folding angle between the first housing part 110 and the second housing part 120 and the second folding angle between the second housing part 120 and the third housing part 130 being identified as being at a second designated angle (e.g., approximately 180 degrees). In the first state 100a (in FIG. 1A, for example), the first housing part 110, the second housing part 120, and the third housing part 130 may be unfolded.

For example, the processor 310 may identify the electronic device 1000 as being in the third state 100c (in FIG. 1C, for example) based on the folding angle between the first housing part 110 and the second housing part 120 being at the first designated angle (e.g., approximately zero to 10 degrees) and the folding angle between the second housing part 120 and the third housing part 130 being at the second designated angle (e.g., approximately 180 degrees). In the third state 100c (in FIG. 1C, for example), the first housing part 110 and the second housing part 120 may be closed (or folded), while the second housing part 120 and the third housing part 130 may be unfolded.

As described above, the first state 100a (in FIG. 1A, for example) of the electronic device 1000 may include the unfolded state, the second state 100b (in FIG. 1B, for example) may include the folding state, and the third state 100c (in FIG. 1C, for example) may include the half-folded state.

In addition, the processor 310 may identify whether either the first housing part 110 or the third housing part 130 is in the partially folded state based on the first folding angle and the second folding angle.

For example, the processor 310 may identify the first housing part 110 as being in the partially folded state if the first folding angle between the first housing part 110 and the second housing part 120 is identified as being at an angle (e.g., approximately 30 to 115 degrees, or approximately 30 to 160 degrees, preferably 60 - 150 degrees, more preferably 90 - 150 degrees) between the first designated angle (e.g., approximately zero to 10 degrees) and the second designated angle (e.g., approximately 180 degrees).

For example, the processor 310 may identify the third housing part 130 (or the second housing part 120) as being in the partially folded state if the second folding angle between the second housing part 120 and the third housing part 130 is identified as being at an angle (e.g., approximately 30 to 115 degrees, or approximately 30 to 160 degrees, preferably 60 - 150 degrees, more preferably 90 - 150 degrees) between the first designated angle (e.g., approximately zero to 10 degrees) and the second designated angle (e.g., approximately 180 degrees).

According to an embodiment, if either the first housing part 110 or the third housing part 130 is identified as being the partially folded state in the portrait mode, the processor 310 may display an application corresponding to a predetermined type in an upper region among regions (for example, a first region and a second region) divided along a first boundary of the first housing part 110 caused by the partially folded state or a second boundary of the third housing part 130 caused by the partially folded state.

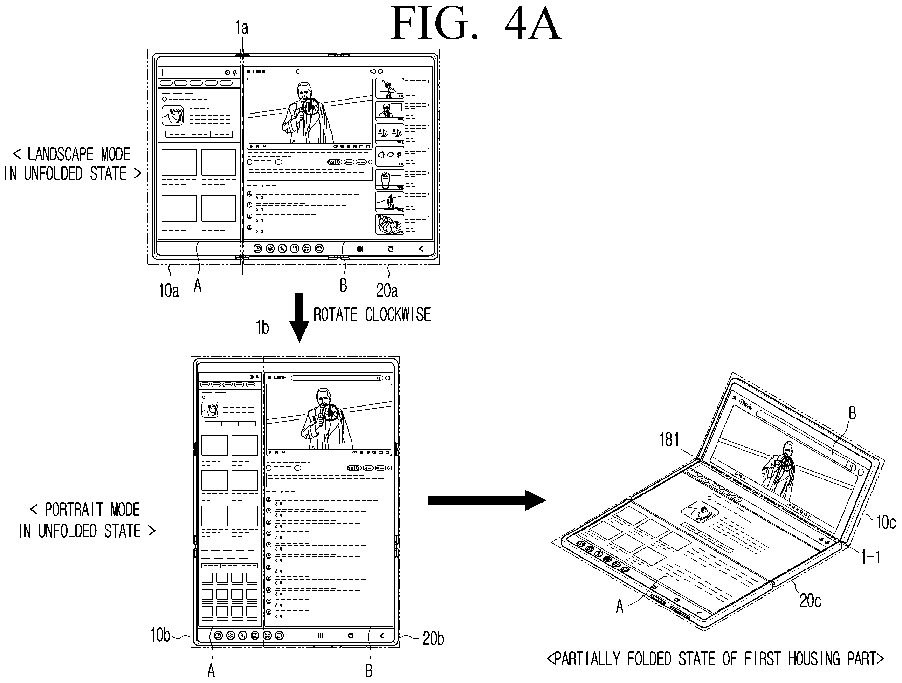

FIG. 4A is a diagram for describing the electronic device that displays the application corresponding to the predetermined type in an upper region if rotated clockwise according to an embodiment of the present disclosure.

According to an embodiment, the state of the electronic device 1000 may include either the first housing part 110 or the third housing part 130 being in the partially folded state (or the partially unfolded state, the partially folded state, or a flex state) in addition to the electronic device 1000 being in the unfolded state (or the unfolding state), the electronic device 1000 being in the closed state (or the folded state (e.g., completely folded state), the folding state, or the multi-folded state), and the electronic device 1000 being in the partially closed and partially unfolded state (or the single-folded state or the half-folded state).

Referring to FIG. 4A, in the unfolded state of the electronic device 1000, the processor 310 may provide the plurality of applications through the screen on the first display 331.

For example, the processor 310 may divide the screen into a plurality of regions and dispose different applications in the plurality of regions, respectively, thereby providing the plurality of applications simultaneously.

For example, in the multi-window mode, the processor 310 may divide the screen into a first region 10a and a second region 20a along a boundary 1a, and display a first application A in the first region 10a and a second application B in the second region 20a. For example, the processor 310 may display the first application A in the first region 10a disposed in a left region and the second application B in the second region 20a disposed in a right region.

According to an embodiment, in the landscape mode of the electronic device 1000, the boundary 1a may be parallel to the main direction of the shorter lateral surface (or perpendicular to the main direction of the longer lateral surface) of the electronic device 1000, and a position of the boundary 1a may be modified on the first display 331 based on the user input (or a user setting).

For example, an area ratio of the first region 10a to the second region 20a divided along the boundary 1a may be 1:1. However, the area ratio is not limited thereto, and may be variously modified based on the user input, such as 1:2 and 2:1.

According to an embodiment, the processor 310 may identify the display mode of the electronic device 1000 based on its rotation angle or tilt detected through the third sensor 363. For example, the display mode of the electronic device 1000 may include the landscape mode and the portrait mode. For example, in the landscape mode, a width of the screen may be longer than its height, and in the portrait mode, the height of the screen may be longer than its width. In this case, the longer lateral surface define a top edge and a bottom edge of the first display 311. The content of applications A and B is aligned so that it runs top-to-bottom from the top edge to the bottom edge. In landscape mode, the shorter lateral surfaces define a left edge and a right edge of the first display 311. The left edge and right edge may also define left and right portions of the display. According a possible definition, the left portion is that portion of the first display, on one side of a vertical folding line, which is adjacent to the left edge in landscape mode and the right portion is that portion of the first display, on the other side of the folding line, which is adjacent to the right edge of the display.

For example, if the display mode of the electronic device 1000 is the landscape mode, the longer lateral surface of the electronic device 1000 may correspond to the width of the screen, and the shorter lateral surface of the electronic device 1000 may correspond to the height of the screen. In addition, if the display mode of the electronic device 1000 is the portrait mode, the shorter lateral surface of the electronic device 1000 may correspond to the width of the screen, and the longer lateral surface of the electronic device 1000 may correspond to the height of the screen.

The processor 310 may rotate each of the boundary 1a, the first application A, and the second application B if the electronic device 1000 is identified as switching from the landscape mode to the portrait mode through the third sensor 363 based on the rotation of the electronic device 1000.

For example, in the portrait mode, the processor 310 may display the first application A and the second application B in a first region 10b and a second region 20b, respectively, which are divided along a rotated boundary 1b, by rotating the applications to correspond to the portrait mode. When in the portrait mode, the shorter lateral surface define a top edge and a bottom edge of the first display 311. The content of applications A and B is aligned so that it runs top-to-bottom from the top edge to the bottom edge. Top edge and bottom edge thus have a logical meaning based on the landscape or portrait mode. The top edge and bottom edge may also define upper and lower portions of the display. According a possible definition, the upper portion is that portion of the display, on one side of a folding line, which is adjacent to the top edge in portrait mode and the bottom portion is that portion of the display, on the other side of the folding line, which is adjacent to the bottom edge of the display. In portrait mode, the shorter lateral surfaces define a left edge and a right edge of the first display 311. The left edge and right edge may also define left and right portions of the display.

According to an embodiment, if the display mode of the electronic device 1000 is switched based on its rotation, the processor 310 may dispose the rotated boundary 1b on the first display 331 to have the area ratio of the first region 10b to the second region 20b in the display mode after the switch (e.g., portrait mode) corresponds to the area ratio of the first region 10a to the second region 20a in the display mode before the switch (e.g., landscape mode).

For example, if the electronic device 1000 switches from the landscape mode to the portrait mode by rotating clockwise (e.g., rotating approximately 90 degrees clockwise), the processor 310 may dispose the rotated boundary 1b on the first display 331 in the portrait mode of the electronic device 1000 to maintain the area ratio of the first region 10a to the second region 20a, which are divided along the boundary 1a in the landscape mode of the electronic device 1000, also in the portrait mode.

However, the present disclosure is not limited thereto. In the landscape mode of the electronic device 1000, the processor 310 may divide the screen into the first region 10a and the second region 20a along the boundary 1a corresponding to the landscape mode, and in the portrait mode of the electronic device 1000, the processor 310 may divide the screen into the first region 10b and the second region 20b along the boundary 1b corresponding to the portrait mode. Here, the ratio of the first region 10a to the second region 20a in the landscape mode may be different from the ratio of the first region 10b to the second region 20b in the portrait mode.

According to an embodiment, if the electronic device 1000 is identified as switching from the landscape mode to the portrait mode through the third sensor 363, the processor 310 may identify whether either the first housing part 110 or the third housing part 130 is in the partially folded state (or the flex state of the electronic device 1000).

For example, the processor 310 may identify whether either the first housing part 110 or the third housing part 130 is in the partially folded state based on the first folding angle detected through the first sensor 361 and the second folding angle detected through the second sensor 362 if the electronic device 1000 is identified as switching from the landscape mode to the portrait mode through the third sensor 363.

For example, if the electronic device 1000 is identified as being in the unfolded state based on the first folding angle and the second folding angle, in the portrait mode, the processor 310 may display the first application A, which is displayed in the first region 10a disposed in the left region in the landscape mode, in the first region 10b disposed in the left region, and display the second application B, which is displayed in the second region 20a disposed in the right region in the landscape mode, in the second region 20b disposed in the right region, between the first region 10b and the second region 20b divided along the rotated boundary 1b.

According to an embodiment, the processor 310 may display the second application B corresponding to the predetermined type in an upper region and display the first application A in a lower region among a first region 10c and a second region 20c, which are divided along a first boundary 1-1 caused by the partially folded state of the first housing part 110, if the first housing part 110 is identified as being in the partially folded state in the unfolded state and the portrait mode of the electronic device 1000.

For example, if the electronic device 1000 switches from the landscape mode to the portrait mode by rotating clockwise, and the first housing part 110 is then changed from the unfolded state to the partially folded state, the first region 10c may be disposed in the upper region and the second region 20c may be disposed in the lower region among the first region 10c and the second region 20c divided along the first boundary 1-1.

According to an embodiment, the first boundary 1-1 may correspond to the first folding axis 181, and the first folding axis 181 may correspond to a central axis of the first hinge structure 150, which pivotally couples the first housing part 110 to the second housing part 120. According to an embodiment, the first region 10c may correspond to the first housing part 110, and the second region 20c may correspond to the second housing part 120 and the third housing part 130.

According to an embodiment, the first boundary 1-1 may be the same as or different from the boundary 1a that divides the screen into the first region 10a and the second region 20a in the landscape mode of the electronic device 1000.

According to an embodiment, if the electronic device 1000 switches from the landscape mode to the portrait mode by rotating clockwise (e.g., rotating approximately 90 degrees clockwise), and the first housing part 110 is then changed from the unfolded state to the partially folded state, the processor 310 may move the first application A, which is displayed in the first region 10b disposed in the left region in the unfolded state and the portrait mode of the electronic device 1000, to the first region 10c disposed in the upper region and display the same, and move and display the second application B, which is displayed in the second region 20b disposed in the right region in the unfolded state and the portrait mode, to the second region 20c disposed in the lower region and display the same.

According to an embodiment of the present disclosure, if the electronic device 1000 switches from the landscape mode to the portrait mode by rotating clockwise (e.g., rotating approximately 90 degrees clockwise), and the first housing part 110 is then changed from the unfolded state to the partially folded state, the processor 310 may identify whether at least one of the first application A or the second application B corresponds to the predetermined type.

For example, if the second application B corresponds to the predetermined type, the processor 310 may display the second application B in the first region 10c disposed in the upper region and display the first application A in the second region 20c disposed in the lower region among the first region 10c and the second region 20c divided along the first boundary 1-1 caused by the partially folded state of the first housing part 110.

For convenience of description, FIG. 4A assumes that among the first application A and the second application B, the second application B corresponds to the predetermined type and the first application A does not correspond to the predetermined type. However, the present disclosure is not limited thereto, and the first application A may correspond to the predetermined type and the second application B may not correspond to the predetermined type.

For example, in the partially folded state of the first housing part 110 and the portrait mode, the processor 310 may display the first application A corresponding to the predetermined type in the first region 10c disposed in the upper region and display the second application B in the second region 20c disposed in the lower region among the first application A and the second application B.

According to an embodiment, the application corresponding to the predetermined type may include an application that provides content such as video and music.

For example, the application corresponding to the predetermined type may include an application that provides real-time video, such as a video streaming application, an application that provides video (e.g., video on demand (VOD)) based on a time desired by the user (or a user request), or an application that provides music, podcasts, or radio programs, such as a music streaming application. However, the application corresponding to the predetermined type is not limited thereto, and may include an application that provides various forms of video content or music content, such as a social networking application that provides short clips, short form video content (e.g., Instagram Reels), a web browsing application, or a game application.

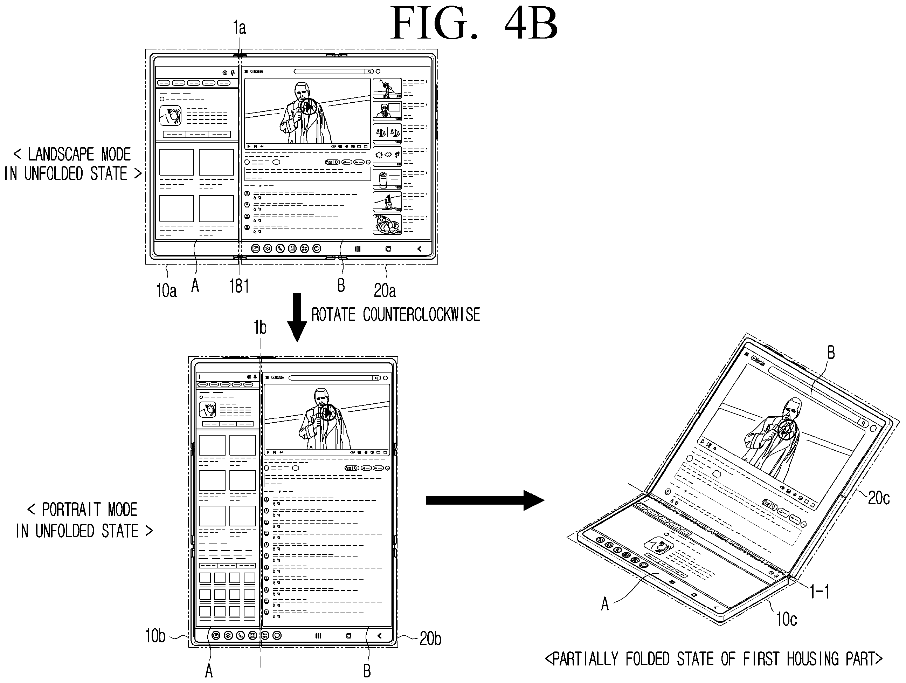

FIG. 4B is a diagram for describing the electronic device that displays the application corresponding to the predetermined type in the upper region if rotated counterclockwise according to an embodiment of the present disclosure.

Referring to FIG. 4B, in the unfolded state of the electronic device 1000, the processor 310 may display the first application A and the second application B respectively in the first region 10a and the second region 20a divided along the boundary 1a caused by the multi-window mode. For example, the processor 310 may display the first application A in the first region 10a disposed in the left region and the second application B in the second region 20a disposed in the right region.

According to an embodiment, if the electronic device 1000 switches from the landscape mode to the portrait mode by rotating counterclockwise (e.g., rotating approximately 90 degrees counterclockwise), the processor 310 may identify whether either the first housing part 110 or the third housing part 130 is in the partially folded state (or the flex state of the electronic device 1000).

According to an embodiment, if the first housing part 110 is identified as being in the partially folded state in the unfolded state and the portrait mode of the electronic device 1000, the processor 310 may display the second application B corresponding to the predetermined type in the upper region, and display the first application A in the lower region among the first region 10c and the second region 20c divided along the first boundary 1-1 caused by the partially folded state of the first housing part 110.

For example, if the electronic device 1000 switches from the landscape mode to the portrait mode by rotating counterclockwise, and the first housing part 110 is then changed from the unfolded state to the partially folded state, the second region 20c may be disposed in the upper region and the first region 10c may be disposed in the lower region among the first region 10c and the second region 20c divided along the first boundary 1-1.

According to an embodiment, if the second application B corresponds to the predetermined type, the processor 310 may display the second application B in the second region 20c disposed in the upper region and display the first application A in the first region 10c disposed in the lower region among the first region 10c and the second region 20c divided along the first boundary 1-1 caused by the partially folded state of the first housing part 110.

According to an embodiment, the first boundary 1-1 may correspond to the first folding axis 181, and the first folding axis 181 may correspond to the central axis of the first hinge structure 150, which pivotally couples the first housing part 110 to the second housing part 120. According to an embodiment, the first region 10c may correspond to the first housing part 110, and the second region 20c may correspond to the second housing part 120 and the third housing part 130.

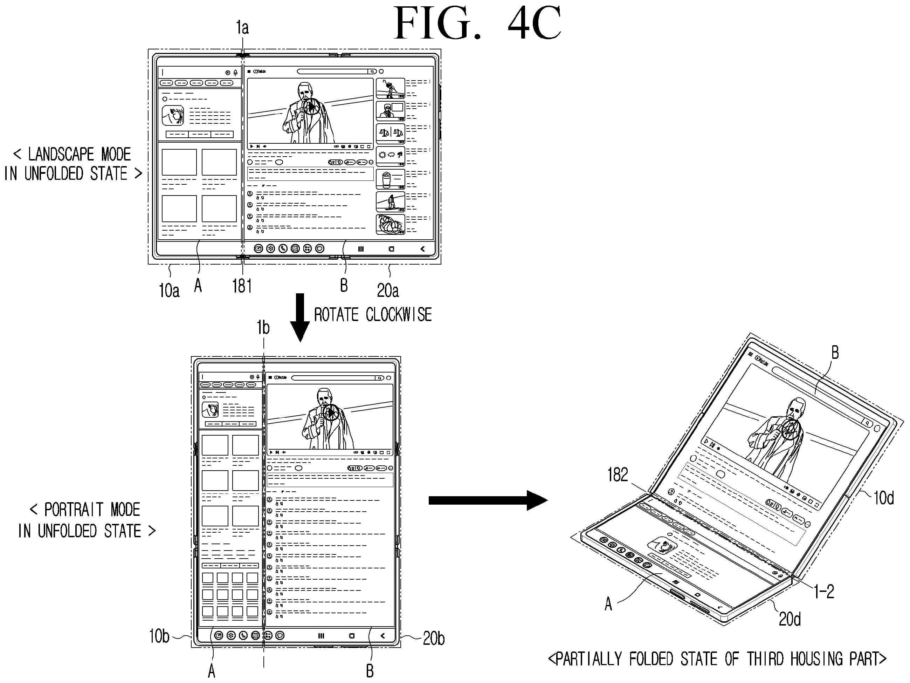

FIG. 4C is a diagram for describing the electronic device that displays the application corresponding to the predetermined type in the upper region if rotated clockwise according to an embodiment of the present disclosure.

Referring to FIG. 4C, in the unfolded state of the electronic device 1000, the processor 310 may display the first application A and the second application B respectively in the first region 10a and the second region 20a divided along the boundary 1a caused by the multi-window mode. For example, the processor 310 may display the first application A in the first region 10a disposed in the left region and the second application B in the second region 20a disposed in the right region.

According to an embodiment, if the electronic device 1000 switches from the landscape mode to the portrait mode by rotating clockwise (e.g., rotating approximately 90 degrees clockwise), the processor 310 may identify whether either the first housing part 110 or the third housing part 130 is in the partially folded state (or the flex state of the electronic device 1000).

According to an embodiment, if the electronic device 1000 is identified as being in the unfolded state, in the unfolded state and the portrait mode, the processor 310 may rotate the first application A and the second application B respectively in the first region 10b and the second region 20b divided along the rotated boundary 1b, to correspond to the portrait mode, and display these applications.

According to an embodiment, if the third housing part 130 is identified as being the partially folded state, the processor 310 may display the second application B corresponding to the predetermined type in an upper region and the first application A in a lower region among a first region 10d and a second region 20d divided along a second boundary 1-2 caused by the partially folded state of the third housing part 130.

For example, if the electronic device 1000 switches from the landscape mode to the portrait mode by rotating clockwise, and the third housing part 130 is then changed from the unfolded state to the partially folded state, the first region 10c may be disposed in the upper region and the second region 20c may be disposed in the lower region among the first region 10d and the second region 20d divided along the second boundary 1-2.

According to an embodiment, if the second application B corresponds to the predetermined type, the processor 310 may display the second application B in the first region 10d disposed in the upper region and display the first application A in the second region 20d disposed in the lower region among the first region 10d and the second region 20d divided along the second boundary 1-2 caused by the partially folded state of the third housing part 130.

According to an embodiment, the second boundary 1-2 may correspond to a second folding axis 182, and the second folding axis 182 may correspond to a central axis of the second hinge structure 160, which pivotally couples the second housing part 120 to the third housing part 130. According to an embodiment, the first region 10d may correspond to the first housing part 110 and the second housing part 120, and the second region 20d may correspond to the third housing part 130.

For convenience of description, FIG. 4C assumes that among the first application A and the second application B, the second application B corresponds to the predetermined type and the first application A does not correspond to the predetermined type. However, the present disclosure is not limited thereto, and the first application A may correspond to the predetermined type and the second application B may not correspond to the predetermined type.

For example, in the partially folded state of the third housing part 130 and the portrait mode, the processor 310 may display the first application A corresponding to the predetermined type in the first region 10d disposed in the upper region and display the second application B in the second region 20d disposed in the lower region among the first application A and the second application B.

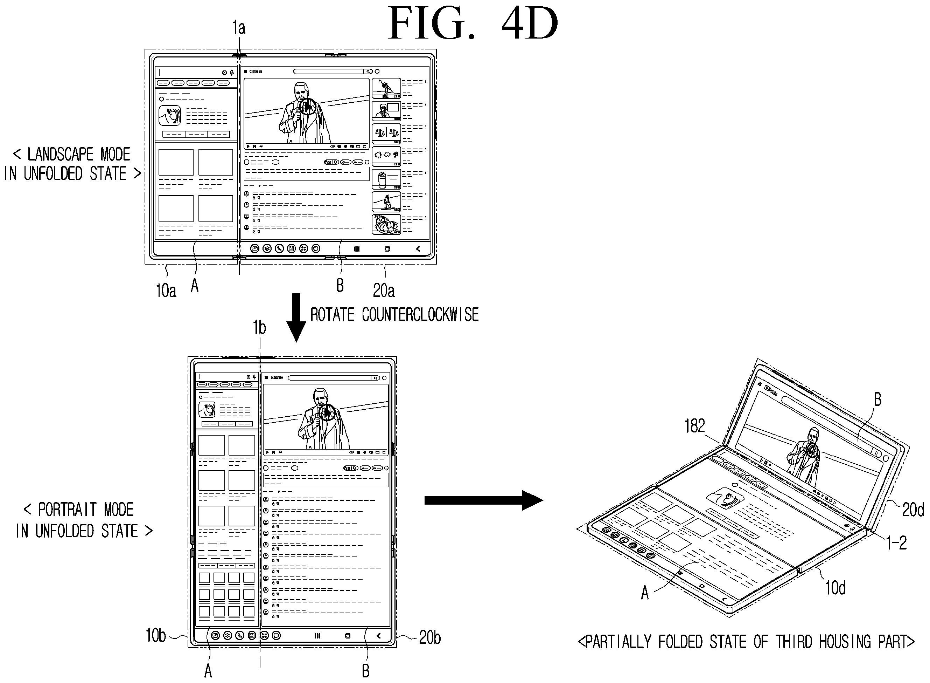

FIG. 4D is a diagram for describing the electronic device that displays the application corresponding to the predetermined type in the upper region if rotated counterclockwise according to an embodiment of the present disclosure.

Referring to FIG. 4D, in the unfolded state of the electronic device 1000, the processor 310 may display the first application A and the second application B respectively in the first region 10a and the second region 20a divided along the boundary 1a caused by the multi-window mode. For example, the processor 310 may display the first application A in the first region 10a disposed in the left region and the second application B in the second region 20a disposed in the right region.

According to an embodiment, if the electronic device 1000 switches from the landscape mode to the portrait mode by rotating counterclockwise (e.g., rotating approximately 90 degrees counterclockwise), the processor 310 may identify whether either the first housing part 110 or the third housing part 130 is in the partially folded state (or the flex state of the electronic device 1000).

According to an embodiment, if the third housing part 130 is identified as being in the partially folded state in the unfolded state and the portrait mode of the electronic device 1000, the processor 310 may display the second application B corresponding to the predetermined type in the upper region and display the first application A in the lower region among the first region 10d and the second region 20d divided along the second boundary 1-2 caused by the partially folded state of the third housing part 130.

For example, if the electronic device 1000 switches from the landscape mode to the portrait mode by rotating counterclockwise, and the third housing part 130 is then changed from the unfolded state to the partially folded state, the second region 20d may be disposed in the upper region and the first region 10d may be disposed in the lower region among the first region 10d and the second region 20d divided along the second boundary 1-2.

According to an embodiment, if the second application B corresponds to the predetermined type, the processor 310 may display the second application B in the second region 20d disposed in the upper region and display the first application A in the first region 10d disposed in the lower region among the first region 10d and the second region 20d divided along the second boundary 1-2 caused by the partially folded state of the third housing part 130.

According to an embodiment, the second boundary 1-2 may correspond to the second folding axis 182, and the second folding axis 182 may correspond to the central axis of the second hinge structure 160, which pivotally couples the second housing part 120 to the third housing part 130. According to an embodiment, the first region 10d may correspond to the first housing part 110 and the second housing part 120, and the second region 20d may correspond to the third housing part 130.

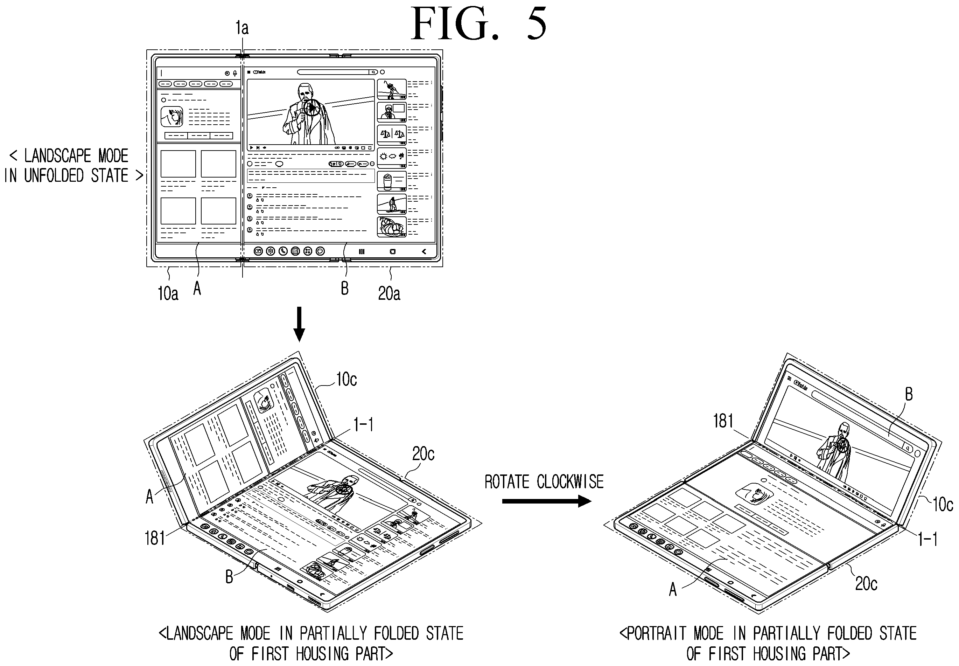

FIG. 5 is a diagram for describing the electronic device that displays the application corresponding to the predetermined type in the upper region if rotated in its partially folded state according to an embodiment of the present disclosure.

Referring to FIGS. 4A to 4D, the description assumes and describes a case where the electronic device 1000 switches from the landscape mode to the portrait mode in the unfolded state, and either the first housing part 110 or the third housing part 130 is then identified as being in the partially folded state, the present disclosure is not limited thereto, and as illustrated in FIG. 5, according to an embodiment of the present disclosure, the electronic device 1000 may switch from the landscape mode to the portrait mode in the partially folded state of either the first housing part 110 or the third housing part 130.

Referring to FIG. 5, in the unfolded state of the electronic device 1000, the processor 310 may display the first application A and the second application B respectively in the first region 10a and the second region 20a divided along the boundary 1a caused by the multi-window mode. For example, the processor 310 may display the first application A in the first region 10a disposed in the left region and the second application B in the second region 20a disposed in the right region.

According to an embodiment, if the first housing part 110 is identified as being changed from the unfolded state to the partially folded state based on the first folding angle, the processor 310 may display the first application A and the second application B respectively in the first region 10c and the second region 20c divided along the first boundary 1-1.

For example, the boundary 1a that divides the first region 10a from the second region 20a in the unfolded state and the first boundary 1-1 that divides the first region 10c from the second region 20c in the partially folded state of the first housing part 110 may be the same or different.

According to an embodiment, the processor 310 may detect the rotation of the electronic device 1000 through the third sensor 363, and if the electronic device 1000 switches from the landscape mode to the portrait mode by rotating clockwise (e.g., rotating 90 degrees clockwise), the processor 310 may display the second application B corresponding to the predetermined type among the first application A and the second application B in the first region 10c disposed in the upper region and the first application A in the second region 20c disposed in the lower region among the first region 10c and the second region 20c.

For example, if the first housing part 110 is in the partially folded state and the electronic device 1000 is in the landscape mode, the processor 310 may display the first application A disposed in the left region along the first boundary 1-1 and the second application B disposed in the right region along the first boundary 1-1. Next, if the electronic device 1000 rotates clockwise, the processor 310 may rotate and display the first application A in the first region 10c divided along the first boundary 1-1, and may rotate and display the second application B in the second region 20c. Meanwhile, if the second application B corresponds to the predetermined type, in the portrait mode, the processor 310 according to an embodiment of the present disclosure may move the second application B to the first region 10c disposed in the upper region and display the same, and move the first application A to the second region 20c disposed in the lower region and display the same.

For convenience of description, FIG. 5 assumes a case where the electronic device 1000 rotates clockwise, and the present disclosure is not limited thereto.

For example, if the electronic device 1000 switches from the landscape mode to the portrait mode by rotating counterclockwise (e.g., rotating 90 degrees counterclockwise), the processor 310 may display the second application B corresponding to the predetermined type among the first application A and the second application B in the second region 20c disposed in the upper region and the first application A in the first region 10c disposed in the lower region among the first region 10c and the second region 20c.

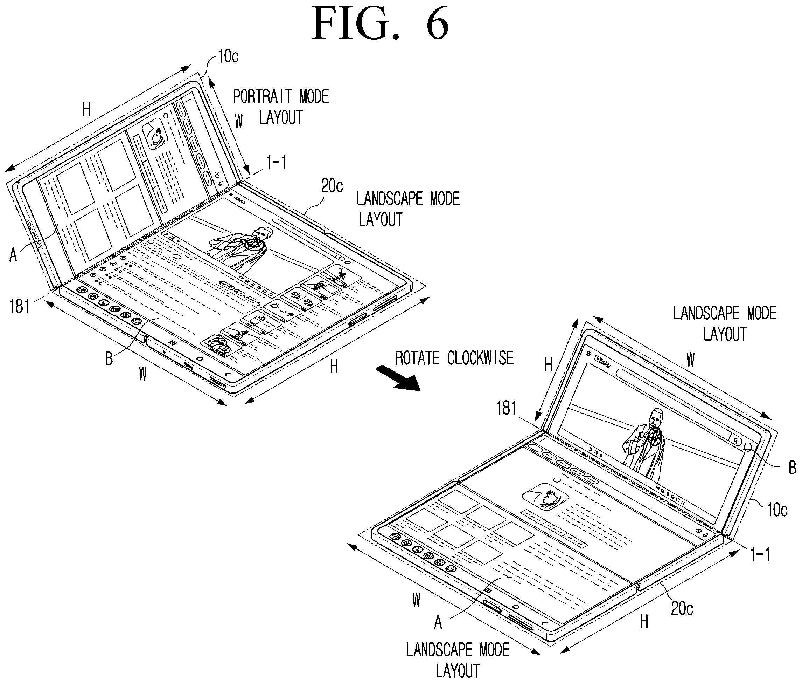

FIG. 6 is a diagram for describing the landscape and portrait mode layouts of the application according to an embodiment of the present disclosure.

Referring to FIG. 6, if the first housing part 110 is identified as being in the partially folded state in the landscape mode, the processor 310 may display the first application A in the first region 10c corresponding to the first housing part 110, and display the second application B in the second region 20c corresponding to the second housing part 120 and the third housing part 130 along the first boundary 1-1 corresponding to the central axis, that is, the first folding axis 181 of the first hinge structure 150, which connects the first housing part 110 to the second housing part 120.

According to an embodiment, each of the plurality of applications may include its landscape mode layout and portrait mode layout.

For example, objects (or content) included in the application may be disposed horizontally in the landscape mode layout, and disposed vertically in the portrait mode layout.

For example, each of the first application A and the second application B may have the landscape mode layout suitable for the screen whose width is greater than its height, and the portrait mode layout suitable for the screen whose height is greater than its width.

According to an embodiment, in the landscape mode of the electronic device 1000, the first region 10c has a smaller vertical length (or width) than horizontal length (or height), and the processor 310 may display the first application A in the portrait mode layout based on an aspect ratio of the first region 10c corresponding to the first housing part 110.

For example, among the objects included in the first application A in the portrait mode layout of the first application A, the processor 310 may enlarge a video (e.g., video having a ratio of 9:16), an image (e.g., thumbnail image), a text, or a message, suitable for provision in the portrait mode, relative to the other objects, or dispose the same in the upper region, or provide the same on the entire screen within the first region 10c.

According to an embodiment, in the landscape mode of the electronic device 1000, the processor 310 may display the second application B in the landscape mode layout based on an aspect ratio of the second region 20c corresponding to the second housing part 120 and the third housing part 130.

For example, among the objects included in the second application B in the landscape mode layout of the second application B, the processor 310 may enlarge a video (e.g., video having a ratio of 16:9, 4:3 or 1:1), music, or game, suitable for provision in the landscape mode, relative to the other objects, dispose the same in the upper region, or provide the same on the entire screen within the second region 20c.

According to an embodiment, if the electronic device 1000 switches to the portrait mode by rotating clockwise (e.g., rotating approximately 90 degrees clockwise), the processor 310 may divide the first display 331 into the first region 10c and the second region 20c by maintaining the first boundary 1-1 provided in the landscape mode also in the portrait mode.

According to an embodiment, in the multi-window mode, the processor 310 may identify whether each of the first application A and the second application B being displayed through the first display 331 correspond to the predetermined type.

For example, if the second application B corresponds to the predetermined type, the processor 310 may display the second application B in the first region 10c instead of the second region 20c in the portrait mode.

For example, in the portrait mode of the electronic device 1000, the processor 310 may display the second application B corresponding to the predetermined type in the first region 10c disposed in the upper region and display the first application A in the second region 20c disposed in the lower region among the first region 10c and the second region 20c.

For example, if the first housing part 110 is in the partially folded state and the electronic device 1000 is in the portrait mode, the second housing part 120 and the third housing part 130 may be in a state of being disposed on the flat surface, and the first housing part 110 may be in a state of being tilted from second housing part 120 by the first folding angle.

The second housing part 120 and the third housing part 130, which are in the state of being disposed on the flat surface, allow easy user interaction, such as handwriting or touching operation, while the first housing part 110, which is in the state of being tilted, may not allow easy user interaction. According to an embodiment, the processor 310 may display the second application B (e.g., video application) corresponding to the predetermined type, in which the user interaction, such as the handwriting operation, does not occur frequently, in the first region 10c disposed in the upper region, and display the first application A (e.g., memo application or web browsing application), in which the user interaction, such as the handwriting operation, occurs frequently, in the second region 20c disposed in the lower region.

According to an embodiment, in the portrait mode of the electronic device 1000, the processor 310 may display the second application B corresponding to the predetermined type in the landscape mode layout based on the aspect ratio of the first region 10c corresponding to the first housing part 110.

For example, among the objects included in the second application B in the landscape mode layout of the second application B, the processor 310 may enlarge a video (e.g., video having the ratio of 16:9), music, or game, suitable for provision in the landscape mode, relative to the other objects, dispose the same in the upper region, or provide the same on the entire screen within the first region 10c.

According to an embodiment, in the portrait mode of the electronic device 1000, the processor 310 may display the first application A in the landscape mode layout based on the aspect ratio of the second region 20c corresponding to the second housing part 120 and the third housing part 130.

For example, among the objects included in the first application A in the landscape mode layout of the first application A, the processor 310 may enlarge the video (e.g., video having the ratio of 16:9, 4:3 or 1:1), music, or game, suitable for provision in the landscape mode, relative to the other objects, dispose the same in the upper region, or provide the same on the entire screen within the second region 20c.

Referring to FIG. 6, a horizontal length (or width) of the second region 20c in the landscape mode of the electronic device 1000 may correspond to a vertical length (or height) of the second region 20c in the portrait mode of the electronic device 1000, and a vertical length (or height) of the second region 20c in the landscape mode of the electronic device 1000 may correspond to a horizontal length (or width) of the second region 20c in the portrait mode of the electronic device 1000.

For example, the aspect ratio of the second region 20c may be 1:1 in the portrait mode if the aspect ratio of the second region 20c is 1:1 in the landscape mode of the electronic device 1000, the aspect ratio of the second region 20c may be 8:9 (or, 1:1.125) in the portrait mode if the aspect ratio of the second region 20c is 9:8 (or 1.125:1) in the landscape mode of the electronic device 1000, and the aspect ratio of the second region 20c may be 3:4 in the portrait mode if the aspect ratio of the second region 20c is 4:3 in the landscape mode of the electronic device 1000.

According to an embodiment, in the landscape mode of the electronic device 1000, the processor 310 may display the second application B in the landscape mode layout in the second region 20c, and in the portrait mode of the electronic device 1000, the processor 310 may display the first application A in the landscape mode layout in the second region 20c.

For convenience of description, FIG. 6 assumes a case where the first housing part 110 is in the partially folded state, the electronic device 1000 rotates clockwise to thus dispose the first region 10c corresponding to the first housing part 110 in the upper region, and dispose the second region 20c corresponding to the second housing part 120 and the third housing part 130 in the lower region, and the present disclosure is not limited thereto.

For example, as described with reference to FIG. 4B, the first housing part 110 may be in the partially folded state, the electronic device 1000 may rotate counterclockwise to dispose the first region 10c corresponding to the first housing part 110 in the lower region, and dispose the second region 20c corresponding to the second housing part 120 and the third housing part 130 in the upper region; as described with reference to FIG. 4C, the third housing part 130 may be in the partially folded state, the electronic device 1000 may rotate clockwise to dispose the first region 10d corresponding to the first housing part 110 and the second housing part 120 in the upper region, and dispose the second region 20d corresponding to the third housing part 130 in the lower region; and as described with reference to FIG. 4D, the third housing part 130 may be in the partially folded state, and the electronic device 1000 may rotate counterclockwise to dispose the first region 10d corresponding to the first housing part 110 and the second housing part 120 in the lower region, and dispose the second region 20d corresponding to the third housing part 130 in the upper region.

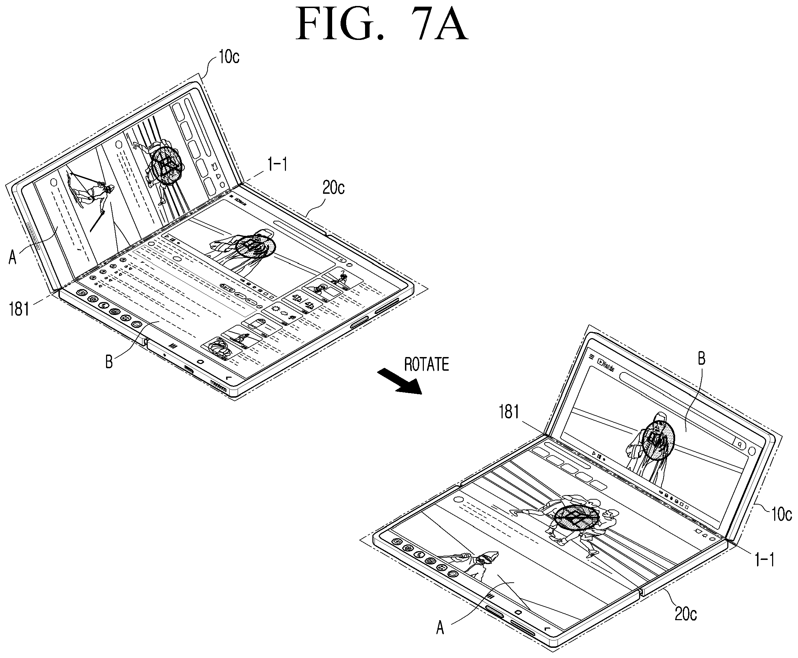

FIG. 7A is a diagram for describing the electronic device that displays any one activated application in the upper region among the applications each corresponding to the predetermined type according to an embodiment of the present disclosure.

Referring to FIG. 7A, in the landscape mode, the processor 310 may display the first application A and the second application B, respectively, based on the multi-window mode.

For example, if the first housing part 110 is in the partially folded state in the multi-window mode, the processor 310 may display the first application A in the first region 10c divided along the first boundary 1-1, and display the second application B in the second region 20c.

According to an embodiment, if the first housing part 110 is in the partially folded state and the electronic device 1000 rotates and switches from the landscape mode to the portrait mode, the processor 310 may identify whether each of the first application A and the second application B corresponds to the predetermined type.

For example, the processor 310 may display one application, which is activated at a time at which the electronic device 1000 rotates and switches to the portrait mode, in the first region 10c disposed in the upper region and the other application in the second region 20c disposed in the lower region among the first application A and the second application B if each of the first application A and the second application B corresponds to the predetermined type.

For example, as illustrated in FIG. 7A, the first application A, which is an application that provides a video, may correspond to the predetermined type and may not be playing the video (e.g., may be paused) or may be playing the video in a muted state. The second application B, which is an application that provides a video, may correspond to the predetermined type and may be playing the video (e.g., may be outputting both video and audio).

According to an embodiment, if each of the first application A and the second application B corresponds to the predetermined type, the processor 310 may identify any one playing the video (e.g., outputting both video and audio) as the activated application, and identify the other application not playing the video or playing the video in the muted state as a deactivated application.

For example, the processor 310 may display the second application B (e.g., second application B playing the video), which is activated at a time at which the first housing part 110 switches from the partially folded state to the portrait mode, in the first region 10c disposed in the upper region, and display the deactivated first application A (e.g., first application A not playing the video) the second region 20c disposed in the lower region if each of the first application A and the second application B corresponds to the predetermined type.

According to an embodiment, if the electronic device 1000 is in the unfolded state in the multi-window mode, the processor 310 may display the first application A and the second application B respectively in the first region 10a and the second region 20a divided along the boundary 1a.

According to an embodiment, if the electronic device 1000 rotates and switches from the landscape mode to the portrait in the unfolded state, the processor 310 may identify whether either the first housing part 110 or the third housing part 130 is in the partially folded state (or the flex state of the electronic device 1000).

According to an embodiment, in the folded state of the electronic device 1000 and in the portrait mode, the processor 310 may identify whether each of the first application A and the second application B corresponds to the predetermined type if the first housing part 110 is identified as being in the partially folded state.

For example, the processor 310 may display one application, which is activated at a time at which the first housing part 110 is identified as being partially folded state, in the first region 10c disposed in the upper region, and the other application in the second region 20c disposed in the lower region among the first application A and the second application B if each of the first application A and the second application B corresponds to the predetermined type.

For example, if the electronic device 1000 switches from the unfolded state to the portrait mode and the first housing part 110 is then identified as being in the partially folded state, the processor 310 may display the second application B (e.g., second application B playing the video), which is activated at the time the first housing part 110 is identified as being partially folded state, in the first region 10c disposed in the upper region, and display the deactivated first application A (e.g., first application A not playing the video) in the second region 20c disposed in the lower region.

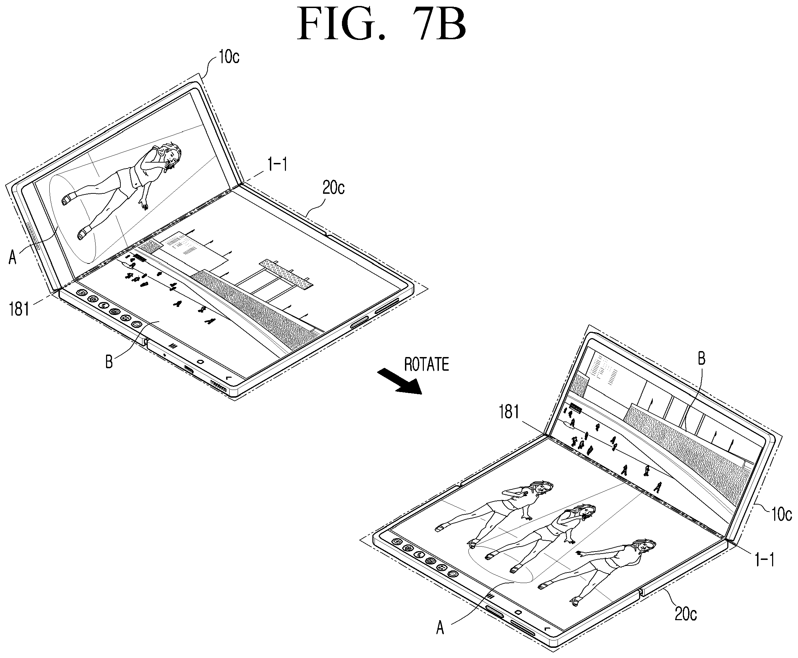

FIG. 7B is a diagram for describing the electronic device that displays the application in the upper region based on a ratio of the application according to an embodiment of the present disclosure.

Referring to FIG. 7B, in the landscape mode, the processor 310 may display the first application A and the second application B, respectively, based on the multi-window mode.

For example, if the first housing part 110 is in the partially folded state in the multi-window mode, the processor 310 may display the first application A in the first region 10c divided along the first boundary 1-1, and display the second application B in the second region 20c.

According to an embodiment, if the first housing part 110 is in the partially folded state and the electronic device 1000 rotates and switches from the landscape mode to the portrait mode, the processor 310 may identify whether each of the first application A and the second application B corresponds to the predetermined type.

For example, if each of the first application A and the second application B corresponds to the predetermined type, the processor 310 may identify respective ratios of the first application A and the second application B.

Referring to FIG. 7B, in the landscape mode of the electronic device 1000, a ratio of the content provided by the first application A may correspond to the portrait mode layout, and a ratio of the content provided by the second application B may correspond to the landscape mode layout.

For example, the content provided by the first application A may be video content having the ratio of 9:16, and the content provided by the second application B may be content having the ratio of 8:9.

According to an embodiment, if the electronic device 1000 rotates and switches to the portrait mode, the first region 10c may be disposed in the upper region, and the second region 20c may be disposed in the lower region.

According to an embodiment, the first region 10c may be changed to the ratio of 16:9 in the portrait mode if the first region 10c has the ratio of 9:16 in the landscape mode, and the second region 20c may be changed to the ratio of 9:8 in the portrait mode if the second region 20c has the ratio of 8:9 in the landscape mode.

According to an embodiment, the video content having the ratio of 9:16 provided by the first application A is suitable for provision in the second region 20c among the first region 10c having the ratio of 16:9 and the second region 20c having the ratio of 8:9 in the portrait mode (or distortion occurs if this content is provided in the first region 10c), and accordingly, the processor 310 may dispose the first application A in the second region 20c in the portrait mode.

According to an embodiment, the processor 310 may dispose the second application B, which is disposed in the second region 20c in the portrait mode, in the first region 10c in the landscape mode.

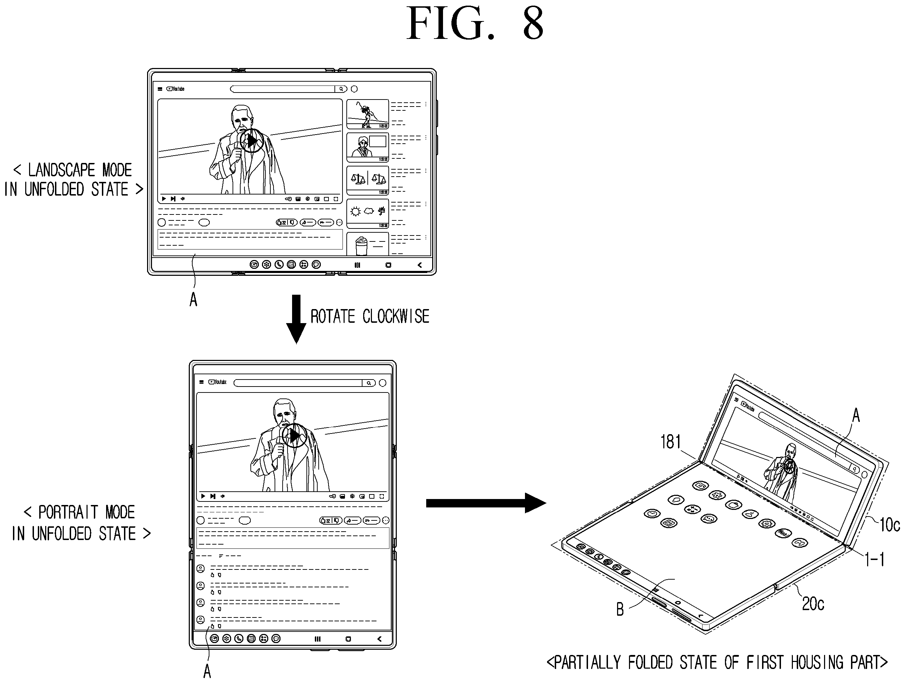

FIG. 8 is a diagram for describing the electronic device that enters the multi-window mode by identifying its partially folded state according to an embodiment of the present disclosure.

The processor 310 may display the plurality of applications (e.g., first application A and second application B) based on the multi-window mode, or may display one application based on a normal mode.

Referring to FIG. 8, the processor 310 may drive the electronic device 1000 in the normal mode by displaying one application (hereinafter, the first application A) in the unfolded state and the landscape mode of the electronic device 1000.

According to an embodiment, in the unfolded state and in the portrait mode, the processor 310 may rotate the first application A to correspond to the portrait mode and display the same if the rotation of the electronic device 1000 is detected through the third sensor 363 (e.g., 90-degree clockwise rotation).

According to an embodiment, in the portrait mode, the processor 310 may switch the electronic device 1000 from the normal mode to the multi-window mode if at least one of the first housing part 110 or the third housing part 130 is identified as being in the partially folded state.

For example, if the first housing part 110 is changed from the unfolded state to the partially folded state in the portrait mode, the processor 310 may drive the electronic device 1000 in the multi-window mode where the electronic device 1000 may display the different applications in the first region 10c and the second region 20c divided along the first boundary 1-1.

According to an embodiment, if the first housing part 110 is identified as being in the partially folded state in the portrait mode, the processor 310 may identify whether the first application A corresponds to the predetermined type.

According to an embodiment, if one application displayed on the first display 331 in the normal mode, that is, the first application A, corresponds to the predetermined type, the processor 310 may display the first application A in the first region 10c disposed in the upper region among the first region 10c and the second region 20c divided along the first boundary 1-1.

According to an embodiment, the processor 310 may display the second application B in the second region 20c disposed in the lower region. For example, the second application B may include a web browsing application that provides information related to the content (e.g., video) provided by the first application A. However, the present disclosure is not limited thereto, and the second application B may include an application that is displayed before the first application A is executed in the normal mode or an application being executing in the background.

According to an embodiment, the processor 310 may display a home screen in the second region 20c disposed in the lower region. For example, the home screen may include icons and widgets respectively corresponding to the plurality of applications installed (or executable) on the electronic device 1000. The home screen may also be referred to as a desktop.

For example, the processor 310 may display the home screen in the second region 20c, and if an icon corresponding to the second application B is selected among the icons respectively corresponding to the plurality of applications, the processor 310 may execute the second application B to display the same in the second region 20c.

According to an embodiment, the processor 310 may identify whether the first application A corresponds to the predetermined type if the first housing part 110 is changed from the unfolded state to the partially folded state, and display the first application A in any one of the first region 10c and the second region 20c divided along the first boundary 1-1 if the first application A, that is, the first application A displayed on the first display 331 in the normal mode, does not correspond to the predetermined type.

For example, the processor 310 may display the first application A in the second region 20c, which has a larger area among the first region 10c and the second region 20c. In addition, the processor 310 may drive the electronic device 1000 in the multi-window mode by displaying the second application B in the first region 10c.

However, the present disclosure is not limited thereto, and the processor 310 may identify whether one application, that is, the first application A, displayed on the first display 331 in the normal mode corresponds to the predetermined type if the third housing part 130 is changed from the unfolded state to the partially folded state, and display the first application A in the first region 10d, which has a larger area among the first region 10d and the second region 20d divided along the second boundary 1-2 if the first application A does not correspond to the predetermined type. In addition, the processor 310 may drive the electronic device 1000 in the multi-window mode by displaying the second application B in the second region 20d.

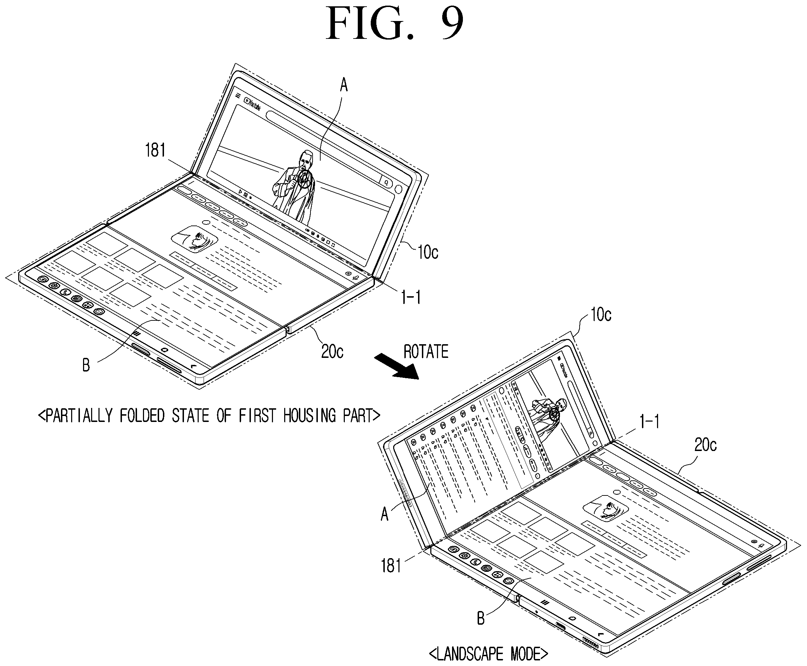

FIG. 9 is a diagram for describing the electronic device that switches from the portrait mode to the landscape mode according to an embodiment of the present disclosure.

According to an embodiment, if the electronic device 1000 is in the portrait mode and the first housing part 110 is in the partially folded state, the processor 310 may display the second application B corresponding to the predetermined type in the first region 10c disposed in the upper region, and display the first application A in the second region 20c disposed in the lower region.

According to an embodiment, if the electronic device 1000 rotates (e.g., rotates 90 degrees counterclockwise) from the portrait mode to the landscape mode, the processor 310 may maintain the first boundary 1-1 caused by the partially folded state of the first housing part 110.

For example, the first housing part 110 may rotate the electronic device 1000 in the partially folded state, and the processor 310 may thus maintain the first region 10c and the second region 20c, which are divided along the first boundary 1-1, in the multi-window mode.

According to an embodiment, the processor 310 may rotate the second application B, which is displayed in the first region 10c, within the first region 10c to correspond to the landscape mode and display the same, and rotate the first application A, which is displayed in the second region 20c, within the second region 20c to correspond to the landscape mode and display the same.

According to an embodiment, as illustrated in FIG. 6, if the electronic device 1000 switches from the landscape mode to the portrait mode, the processor 310 may move the application corresponding to the predetermined type among the plurality of applications being displayed on the first display 331 to the upper region. Meanwhile, as illustrated in FIG. 9, if the electronic device 1000 switches from the portrait mode to the landscape mode, the processor 310 may rotate each of the plurality of applications being displayed on the first display 331 within a current region without moving the application to a different region.

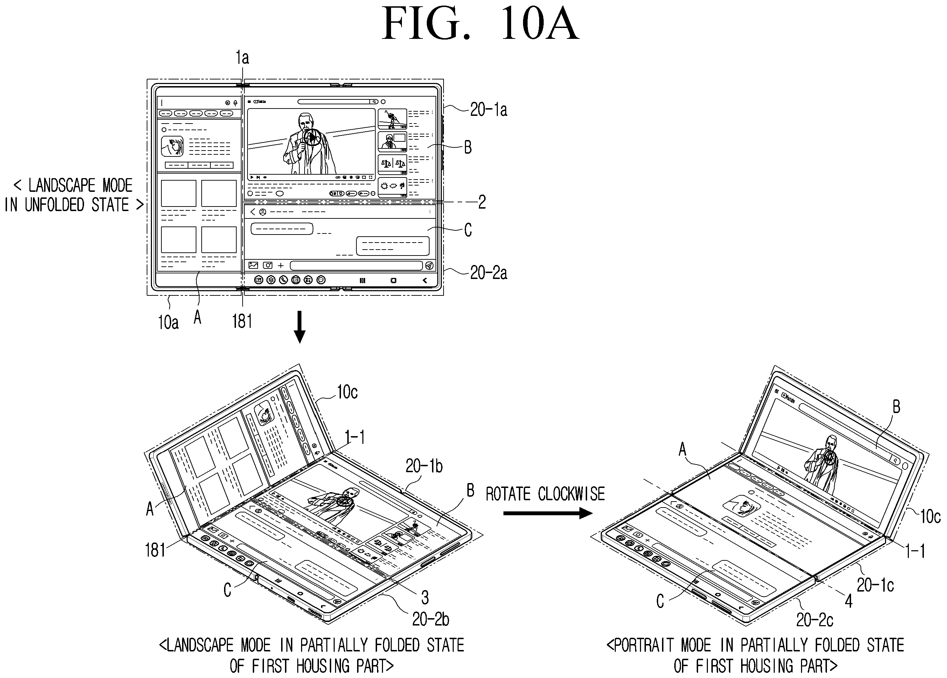

FIG. 10A is a diagram for describing the electronic device that switches from the landscape mode to the portrait mode in the multi-window mode according to an embodiment of the present disclosure.

Referring to FIG. 10A, in the multi-window mode, the processor 310 may display a third application C in addition to the first application A and the second application B.

For example, in the unfolded state, the processor 310 may display a different application on each of the first region 10a and the second region 20a divided along the boundary 1a.

For example, the processor 310 may display the first application A in the first region 10a. The processor 310 may divide the second region 20a into a second-1 region 20-1a and a second-2 region 20-2a based on a first sub-boundary 2, and may display the second application B in the second-1 region 20-1a and the third application C in the second-2 region 20-2a.

According to an embodiment, each of the boundary 1a and the first sub-boundary 2 may be modified on the first display 331 based on the user input (or the user setting).

According to an embodiment, the boundary 1a may be the boundary parallel to the shorter lateral surface (or perpendicular to the longer lateral surface) in the landscape mode of the electronic device 1000, and divide the first display 331 into the first region 10a and the second region 20a.

According to an embodiment, the first sub-boundary 2 may be the boundary parallel to the longer lateral surface (or perpendicular to the shorter lateral surface) in the landscape mode of the electronic device 1000, and divide the second region 20a into the second-1 region 20-1a and the second-2 region 20-2a.

For example, an area ratio of the second-1 region 20-1a to the second-2 region 20-2a, which are divided by the first sub-boundary 2, may be 1:1, or may be variously modified based on the user input. For example, the processor 310 may modify a position of the first sub-boundary 2 based on the user input, and the area ratio of the second-1 region 20-1a to the second-2 region 20-2a may be 2:1.

According to an embodiment, if the first housing part 110 is changed to the partially folded state from the unfolded state and the landscape mode, the processor 310 may divide the first display 331 into the first region 10c and the second region 20c along the first boundary 1-1. According to an embodiment, the processor 310 may display the first application A in the first region 10c.

According to an embodiment, the processor 310 may divide the second region 20a into a second-1 region 20-1b and a second-2 region 20-2b based on a second sub-boundary 3.

According to an embodiment, the processor 310 may display the second application B in the second-1 region 20-1b and the third application C in the second-2 region 20-2b.

According to an embodiment, if the electronic device 1000 rotates and switches to the portrait mode, the processor 310 may maintain the first boundary 1-1 and display the second application B corresponding to the predetermined type among the first application A, the second application B, and the third application C in the first region 10c disposed in the top region.

According to an embodiment, if the electronic device 1000 rotates and switches to the portrait mode, the processor 310 may rotate the second sub-boundary 3. For example, the processor 310 may divide the second region 20c into a second-1 region 20-1c and a second-2 region 20-2c based on a rotated second sub-boundary 4, among the first region 10c and the second region 20c divided along the first boundary 1-1.

According to an embodiment, the processor 310 may display the second application B corresponding to the predetermined type in the first region 10c disposed in the top region, the first application A in the second-1 region 20-1c, and the third application C in the second-2 region 20-2c among the first region 10c, the second-1 region 20-1c, and the second-2 region 20-2c. According to an embodiment, the region where the first application A is displayed may be switched from the first region 10c before the rotation to the second-1 region 20-1c after the rotation, and the region where the second application B corresponding to the predetermined type is displayed may be switched from the second-1 region 20-1b before the rotation to the first region 10c after the rotation. According to an embodiment, the first region 10c may be disposed in the top region if the first housing part 110 is in the partially folded state in the portrait mode of the electronic device 1000.

Referring to FIG. 10A, the rotated second sub-boundary 4 may be the same as or different from the second boundary 1-2. For example, if the third housing part 130 is identified as being in the partially folded state, the processor 310 may divide the second region 20c, among the first region 10c and the second region 20c divided along the first boundary 1-1, into the second-1 region 20-1c and the second-2 region 20-2c along the second boundary 1-2 corresponding to the second folding axis 182.

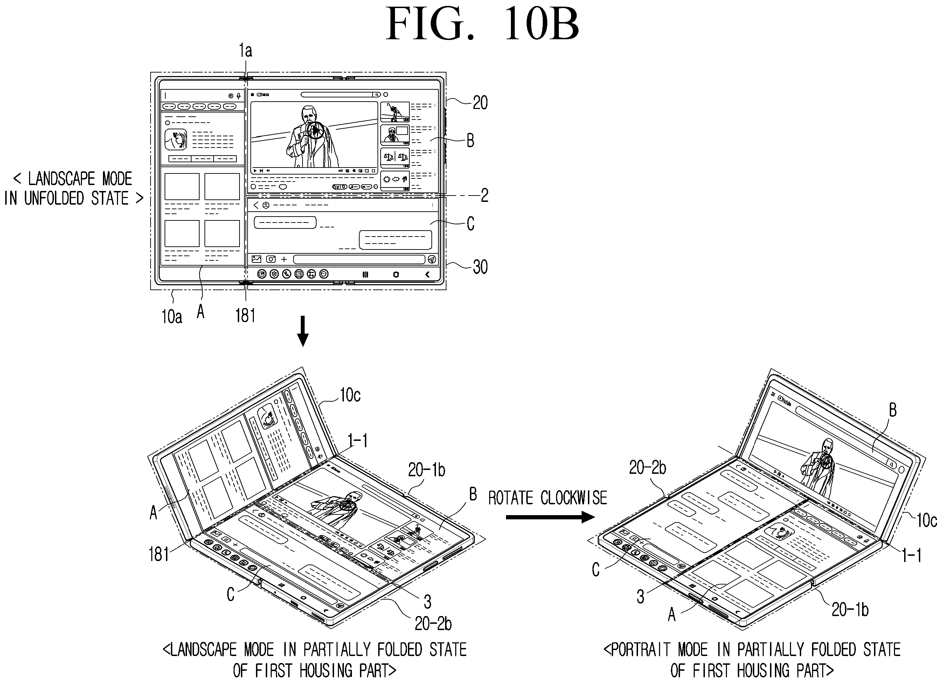

FIG. 10B is a diagram for describing the electronic device that switches from the landscape mode to the portrait mode in the multi-window mode according to an embodiment of the present disclosure.

Referring to FIG. 10B, in the unfolded state, the processor 310 may display the first application A in the first region 10a among the first region 10a and the second region 20a divided along the boundary 1a, and divide the second region 20a into the second-1 region 20-1a and the second-2 region 20-2a along the first sub-boundary 2 to thus display the second application B in the second-1 region 20-1a and the third application C in the second-2 region 20-2a.

According to an embodiment, if the first housing part 110 is changed to the partially folded state, the processor 310 may divide the first display 331 into the first region 10c and the second region 20c along the first boundary 1-1. According to an embodiment, the processor 310 may display the first application A in the first region 10c.

According to an embodiment, the processor 310 may divide the second region 20c into the second-1 region 20-1b and the second-2 region 20-2b along the second sub-boundary 3.

According to an embodiment, the processor 310 may display the second application B in the second-1 region 20-1b and the third application C in the second-2 region 20-2b.

According to an embodiment, if the electronic device 1000 rotates and switches to the portrait mode, the processor 310 may maintain the first boundary 1-1 and the second sub-boundary 3, and display the second application B corresponding to the predetermined type among the first application A, the second application B, and the third application C in the first region 10c disposed in the top region.

According to an embodiment, the processor 310 may display the second application B corresponding to the predetermined type in the first region 10c disposed in the top region, the first application A in the second-1 region 20-1b, and the third application C in the second-2 region 20-2b among the first region 10c, the second-1 region 20-1b, and the second-2 region 20-2b. According to an embodiment, the region where the first application A is displayed may be switched from the first region 10c before the rotation to the second-1 region 20-1b after the rotation, and the region where the second application B corresponding to the predetermined type is displayed may be switched from the second-1 region 20-1b before the rotation to the first region 10c after the rotation. According to an embodiment, the first region 10c may be disposed in the top region if the first housing part 110 is in the partially folded state in the portrait mode of the electronic device 1000.

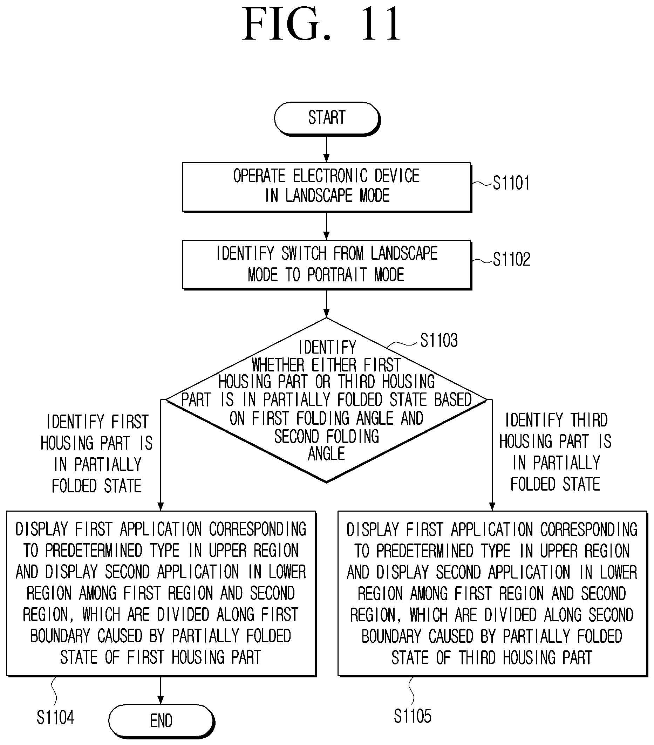

FIG. 11 is a flowchart for describing a control method of an electronic device according to an embodiment of the present disclosure.

Referring to FIG. 11, in the control method of an electronic device 1000, the electronic device 1000 may include the first housing part 110, the second housing part 120 pivotally coupled to the first housing part 110, the third housing part 130 pivotally coupled to the second housing part 120, the first hinge structure 150 pivotally connecting the first housing part 110 to the second housing part 120, the second hinge structure 160 pivotally connecting the second housing part 120 to the third housing part 130, the first display 331 disposed on one surface that extends across the first housing part 110, the second housing part 120, and the third housing part 130, the second display 332 disposed in a partial region on the other surface opposite to the first display 331, the first sensor 361 configured to detect the first folding angle between the first housing part 110 and the second housing part 120, the second sensor 362 configured to detect the second folding angle between the second housing part 120 and the third housing part 130, and the third sensor 363 configured to detect whether the electronic device is in the landscape mode or the portrait mode.

In the control method of the electronic device 1000 according to an embodiment, in operation S1101, the electronic device 1000 may be operated in the landscape mode, and in operation S1102, a switch from the landscape mode to the portrait mode may be identified based on the rotation of the electronic device 1000.

In the control method of an electronic device 1000 according to an embodiment, in operation S1103, whether either the first housing part 110 or the third housing part 130 is in the partially folded state may be identified based on the first folding angle detected through the first sensor 361 and the second folding angle detected through the second sensor 362.

In the control method of an electronic device 1000 according to an embodiment, in operation S1104, the first application A corresponding to the predetermined type may be displayed in the upper region (e.g., first region 10c) and the second application B may be displayed in the lower region (e.g., second region 20c) among the first region 10c and the second region 20c divided along the first boundary 1-1 due to the partially folded state of the first housing part 110 if the first housing part 110 is identified as being in the partially folded state in operation S1103.

In the control method of an electronic device 1000 according to an embodiment, in operation S1105, the first application A corresponding to the predetermined type may be displayed in the upper region (e.g., first region 10d) and the second application B may be displayed in the lower region (e.g., second region 20d) among the first region 10d and the second region 20d divided along the second boundary 1-2 caused by the partially folded state of the third housing part 130 if the third housing part 130 is identified as being in the partially folded state in operation S1103.

Operation S1101 of displaying the applications in the landscape mode according to an embodiment may include an operation of displaying the first application A in one region and displaying the second application B in the other region among the first region and the second region, which are divided along the boundary caused by the multi-window mode, in the landscape mode.

Operation S1103 of identifying whether the housing part is in the partially folded state according to an embodiment may include an operation of identifying whether the first housing part 110 is in the partially folded state if the switch to the portrait mode is identified.

Operation S1104 of displaying the first application A and the second application B in the partially folded state of the first housing part 110 according to an embodiment may include an operation of displaying the second application B corresponding to the predetermined type in the first region disposed in the upper region and displaying the first application A in the second region disposed in the lower region among the first region and the second region, which are divided along the first boundary caused by the partially folded state of the first housing part 110, in the portrait mode.

According to an embodiment, the first region may correspond to the first housing part 110, and the second region may correspond to the second housing part 120 and the third housing part 130.

Operation S1101 of displaying the applications in the landscape mode according to an embodiment may include an operation of displaying the first application A in one region and displaying the second application B in the other region among the first region and the second region, which are divided along the boundary caused by the multi-window mode, in the landscape mode.

Operation S1103 of identifying whether the housing part is in the partially folded state according to an embodiment may include an operation of identifying whether the first housing part 110 is in the partially folded state if the switch to the portrait mode is identified.

Operation S1104 of displaying the first application A and the second application B in the partially folded state of the first housing part 110 according to an embodiment may include an operation of displaying the second application corresponding to the predetermined type in the second region disposed in the upper region and displaying the first application in the first region disposed in the lower region among the first region and the second region, which are divided along the first boundary caused by the partially folded state of the first housing part 110, in the portrait mode.

According to an embodiment, the first region may correspond to the first housing part 110, and the second region may correspond to the second housing part 120 and the third housing part 130.

Operation S1101 of displaying the applications in the landscape mode according to an embodiment may include an operation of displaying the first application A in one region and displaying the second application B in the other region among the first region and the second region, which are divided along the boundary caused by the multi-window mode, in the landscape mode.

Operation S1103 of identifying whether the housing part is in the partially folded state according to the embodiment may include an operation of identifying whether the third housing part 130 is in the partially folded state if the switch to the portrait mode is identified.

Operation S1105 of displaying the first application A and the second application B in the partially folded state of the third housing part 130 according to an embodiment may include an operation of displaying the second application corresponding to the predetermined type in the first region disposed in the upper region and displaying the first application in the second region disposed in the lower region among the first region and the second region, which are divided along the second boundary caused by the partially folded state of the third housing part 130, in the portrait mode.

According to an embodiment, the first region may correspond to the first housing part 110 and the second housing part 120, and the second region may correspond to the third housing part 130.

Operation S1101 of displaying the applications in the landscape mode according to an embodiment may include an operation of displaying the first application A in one region and displaying the second application B in the other region among the first region and the second region, which are divided along the boundary caused by the multi-window mode, in the landscape mode.

Operation S1103 of identifying whether the housing part is in the partially folded state according to an embodiment may include an operation of identifying whether the third housing part 130 is in the partially folded state if the switch to the portrait mode is identified.

Operation S1105 of displaying the first application A and the second application B in the partially folded state of the third housing part 130 according to an embodiment may include an operation of displaying the second application B corresponding to the predetermined type in the second region disposed in the upper region and displaying the first application A in the first region disposed in the lower region among the first region and the second region, which are divided along the second boundary caused by the partially folded state of the third housing part 130, in the portrait mode.

According to an embodiment, the first region may correspond to the first housing part 110 and the second housing part 120, and the second region may correspond to the third housing part 130.

Operation S1104 of displaying the first application A and the second application B in the partially folded state of the first housing part 110 according to an embodiment may include may include an operation of displaying the second application B in the landscape mode layout or the portrait mode layout based on the aspect ratio of the upper region, and an operation of displaying the first application A in the landscape mode layout or the portrait mode layout based on the aspect ratio of the lower region.

Operation S1105 of displaying the first application A and the second application B in the partially folded state of the third housing part 130 according to an embodiment may include an operation of displaying the second application B in the landscape mode layout or the portrait mode layout based on the aspect ratio of the upper region, and an operation of displaying the first application A in the landscape mode layout or the portrait mode layout based on the aspect ratio of the lower region.

Operation S1101 of displaying the applications in the landscape mode according to an embodiment may include an operation of displaying the first application A in one region and displaying the second application B in the other region among the first region and the second region, which are divided along the boundary caused by the multi-window mode, in the landscape mode.

According to an embodiment, operation S1103 of identifying whether either the first housing part 110 or the third housing part 130 is in the partially folded state may include an operation of rotating the boundary to correspond to the rotation of the electronic device if the electronic device is identified as being in the unfolded state based on the first folding angle and the second folding angle in the portrait mode.

The method according to an embodiment may include an operation of displaying the first application A in one region and displaying the second application B in the other region among the first region and the second region, which are divided along the rotated boundary, on the first display.

The method according to an embodiment may include an operation of displaying the second application B in the upper region and displaying the first application A in the lower region among the first region and the second region divided along the first boundary if the first housing part 110 is changes from the unfolded state to the partially folded state.

The method according to an embodiment may include an operation of displaying the second application B in the upper region and displaying the first application A in the lower region among the first region and the second region divided along the second boundary if the third housing part 130 is changes from the unfolded state to the partially folded state.

The operation S1104 of displaying the first application A and the second application B in the partially folded state of the first housing part 110 according to an embodiment may include an operation of displaying one application, which is activated at the time at which the first housing part 110 is identified as being in the partially folded state, in the upper region, and displaying the other application in the lower region among the first application A and the second application B if each of the first application A and the second application B corresponds to the predetermined type.

The operation S1105 of displaying the first application A and the second application B in the partially folded state of the third housing part 130 according to an embodiment may include an operation of displaying one application, which is activated at the time at which the third housing part 130 is identified as being in the partially folded state, in the upper region, and displaying the other application in the lower region among the first application A and the second application B if each of the first application A and the second application B corresponds to the predetermined type.

The method according to an embodiment may include an operation of displaying the first application A in the landscape mode.

The method according to an embodiment may include an operation of rotating and displaying the first application A if the electronic device is identified as being in the unfolded state in the portrait mode.

The method according to an embodiment may include an operation of entering the multi-window mode if the first housing part 110 is identified as switching from the unfolded state to the partially folded state.

The method according to an embodiment may include an operation of displaying the first application A in the first region disposed in the upper region among the first region and the second region divided along the first boundary.

The method according to an embodiment may include an operation of displaying the second application B, which includes the information related to the content provided by the first application A, in the second region disposed in the lower region.

The method according to an embodiment may include an operation of displaying the second application B disposed in the left region and displaying the first application A disposed in the right region among the first region and the second region, which are divided along the first boundary caused by the partially folded state of the first housing part 110 or the second boundary caused by the partially folded state of the third housing part 130 if the electronic device switches from the portrait mode to the landscape mode.

According to an embodiment, the electronic device (e.g., electronic device 1000 in FIG. 3A) may include the display (for example, at least one of the first display 331 or the second display 332 in FIG. 3A) and at least one processor (e.g., processor 310 in FIG. 3A). For the electronic device, according to an embodiment of the present disclosure, provided is the electronic device including: the first housing part; the second housing part pivotally coupled to the first housing part; the third housing part pivotally coupled to the second housing part; the first hinge structure pivotally connecting the first housing part to the second housing part; the second hinge structure pivotally connecting the second housing part to the third housing part; the first display disposed on one surface that extends across the first housing part, the second housing part, and the third housing part; the second display disposed in a partial region on the other surface opposite to the first display; the first sensor configured to detect the first folding angle between the first housing part and the second housing part; the second sensor configured to detect the second folding angle between the second housing part and the third housing part; the third sensor configured to detect whether the electronic device is in the landscape mode or the portrait mode; a memory for storing instructions; and at least one processor, wherein if executed by the at least one processor 310, the instructions cause the electronic device to display the first application and the second application in the landscape mode, identify a switch of the electronic device from the landscape mode to the portrait mode based on its rotation detected through the third sensor, identify whether one of the first housing part 110 or the third housing part 130 is in the partially folded state based on the first folding angle detected through the first sensor and the second folding angle detected through the second sensor 362, and display the second application B corresponding to the predetermined type in the upper region and display the first application A in the lower region among the first region 10 and the second region 20, which are divided along the first boundary 1-1 caused by the partially folded state of the first housing part 110 or the second boundary 1-2 caused by the partially folded state of the third housing part 130, if either the first housing part 110 or the third housing part 130 is identified as being in the partially folded state.

For the control method of an electronic device (e.g., electronic device 1000 in FIG. 3A), according to an embodiment, provided is the control method of an electronic device, in which the electronic device includes the first housing part, the second housing part pivotally coupled to the first housing part, the third housing part pivotally coupled to the second housing part, the first hinge structure pivotally connecting the first housing part to the second housing part, the second hinge structure pivotally connecting the second housing part to the third housing part, the first display disposed on one surface that extends across the first housing part, the second housing part, and the third housing part, the second display disposed in a partial region on the other surface opposite to the first display, the first sensor configured to detect the first folding angle between the first housing part and the second housing part, the second sensor configured to detect the second folding angle between the second housing part and the third housing part, and the third sensor configured to detect whether the electronic device is in the landscape mode or the portrait mode, the method including: an operation (S1101) of displaying the first application and the second application in the landscape mode; an operation (S1102) of identifying a switch of the electronic device from the landscape mode to the portrait mode based on its rotation detected through the third sensor; an operation (S1103) of identifying whether either first housing part 110 or the third housing part 130 is in the partially folded state based on the first folding angle detected through the first sensor and the second folding angle detected through the second sensor 362; an operation (S1104) of displaying the second application corresponding to the predetermined type in the upper region and displaying the first application in the lower region among the first region and the second region, which are divided along the first boundary caused by the partially folded state of the first housing part, if the first housing part is identified as being in the partially folded state; and an operation (S1105) of displaying the second application corresponding to the predetermined type in the upper region and displaying the first application in the lower region among the first region and the second region, which are divided along the second boundary caused by the partially folded state of the third housing part if the third housing part is identified as being in the partially folded state.

Meanwhile, the various embodiments of the present disclosure described above may be implemented in a computer-readable recording medium or a similar device using software, hardware, or a combination thereof. In some cases, the embodiments described in the specification may be implemented by the processor itself. In software implementation, the embodiments such as the procedures and functions described in this specification may be implemented by separate software modules. Each of the software modules may perform one or more functions and operations described in this specification.

Meanwhile, a non-transitory computer-readable medium may store computer instructions for performing processing operations of the electronic device according to the various embodiments of the present disclosure described above. The computer instructions stored in the non-transitory computer-readable medium may allow a specific device to perform the processing operations of the electronic device according to the various embodiments described above if executed by a processor of the specific device.

The non-transitory computer-readable medium is not a medium that temporarily stores data, such as a register, a cache, or a memory, and indicates a machine-readable medium that semi-permanently stores data. A specific example of the non-transitory computer-readable medium may include a compact disk (CD), a digital versatile disk (DVD), a hard disk, a Blu-ray Disc, a universal serial bus (USB), a memory card, a read only memory (ROM), or the like.

Although the an embodiments are illustrated and described in the present disclosure as above, the present disclosure is not limited to the above-described specific an embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. An electronic device 1000 comprising:
a first housing part 110;
a second housing part 120 pivotally coupled to the first housing part 110;
a third housing part 130 pivotally coupled to the second housing part 120;
a first hinge structure 150 pivotally connecting the first housing part 110 to the second housing part 120;
a second hinge structure 160 pivotally connecting the second housing part 120 to the third housing part 130;
a first display 331 disposed on a first surface that extends across the first housing part 110, the second housing part 120, and the third housing part 130;
a first sensor 361 configured to detect a first folding angle between the first housing part 110 and the second housing part 120;
a second sensor 362 configured to detect a second folding angle between the second housing part 120 and the third housing part 130;
a third sensor 363 configured to detect a rotation of the electronic device 1000;
a memory for storing instructions; and
at least one processor 310,
wherein when executed by the at least one processor 310, the instructions cause the electronic device 1000 to
display a first application A and a second application B in a landscape mode, wherein the second application B corresponds to a predetermined type,
identify a switch of the electronic device 1000 from the landscape mode to a portrait mode based on the rotation detected through the third sensor 363, wherein the portrait mode defines a top edge and a bottom edge of the first display,
identify whether either the first housing part 110 or the third housing part 130 is in a partially folded state based on the first folding angle detected through the first sensor 361 and the second folding angle detected through the second sensor 362, and
if either the first housing part 110 or the third housing part 130 is identified as being in the partially folded state, display the second application B in an upper region and display the first application A in a lower region among a first region 10c or 10d and a second region 20c or 20d, wherein the first region and the second region are divided along a first boundary 1-1 caused by the partially folded state of the first housing part 110 or a second boundary 1-2 caused by the partially folded state of the third housing part 130,and wherein the upper region is defined as the region among the first region and the second region that is adjacent the top edge and the bottom region is defined as the region among the first region and the second region that is adjacent to the bottom edge..

2. The device 1000 as claimed in claim 1, wherein when executed by the at least one processor 310, the instructions cause the electronic device 1000 to
display the first application A in one region and display the second application B in the other region among a first region 10a and a second region 20a, which are divided along a boundary 1a caused by a multi-window mode, in the landscape mode,
identify whether the first housing part 110 is in the partially folded state if the switch to the portrait mode is identified through the third sensor 363 based on the rotation, and
display the second application B corresponding to the predetermined type in the first region 10c disposed in the upper region and display the first application A in the second region 20c disposed in the lower region among the first region 10c and the second region 20c, which are divided along the first boundary 1-1 caused by the partially folded state of the first housing part 110, if the first region 10c is disposed in the upper region in the portrait mode,
the first region 10c corresponding to the first housing part 110, and
the second region 20c corresponding to the second housing part 120 and the third housing part 130.

3. The device 1000 as claimed in claim 1, wherein when executed by the at least one processor 310, the instructions cause the electronic device 1000 to
display the first application A in one region and display the second application B in the other region among a first region 10a and a second region 20a, which are divided along a boundary 1a caused by a multi-window mode, in the landscape mode,
identify whether the first housing part 110 is in the partially folded state if the switch to the portrait mode is identified through the third sensor 363 based on the rotation, and
display the second application B corresponding to the predetermined type in the second region 20c disposed in the upper region and display the first application A in the first region 10c disposed in the lower region among the first region 10c and the second region 20c, which are divided along the first boundary 1-1 caused by the partially folded state of the first housing part 110, if the second region 20c is disposed in the upper region in the portrait mode,
the first region 10c corresponding to the first housing part 110, and
the second region 20c corresponding to the second housing part 120 and the third housing part 130.

4. The device 1000 as claimed in claim 1, wherein when executed by the at least one processor 310, the instructions cause the electronic device 1000 to
display the first application A in one region and display the second application B in the other region among a first region 10a and a second region 20a, which are divided along a boundary 1a caused by a multi-window mode, in the landscape mode,
identify whether the third housing part 130 is in the partially folded state if the switch to the portrait mode is identified through the third sensor 363 based on the rotation, and
display the second application B corresponding to the predetermined type in the first region 10d disposed in the upper region and display the first application A in the second region 20d disposed in the lower region among the first region 10d and the second region 20d, which are divided along the second boundary 1-2 caused by the partially folded state of the third housing part 130, if the first region 10d is disposed in the upper region in the portrait mode,
the first region 10d corresponding to the first housing part 110 and the second housing part 120, and
the second region 20d corresponding to the third housing part 130.

5. The device 1000 as claimed in claim 1, wherein when executed by the at least one processor 310, the instructions cause the electronic device 1000 to
display the first application A in one region and display the second application B in the other region among a first region 10a and a second region 20a, which are divided along a boundary 1a caused by a multi-window mode, in the landscape mode,
identify whether the third housing part 130 is in the partially folded state if the switch to the portrait mode is identified through the third sensor 363 based on the rotation, and
display the second application B corresponding to the predetermined type in the second region 20d disposed in the upper region and display the first application A in the first region 10d disposed in the lower region among the first region 10d and the second region 20d, which are divided along the second boundary 1-2 caused by the partially folded state of the third housing part 130, if the second region 20d is disposed in the upper region in the portrait mode,
the first region 10d corresponding to the first housing part 110 and the second housing part 120, and
the second region 20d corresponding to the third housing part 13.

6. The device 1000 as claimed in any one of the claims 1 to 5, wherein when executed by the at least one processor 310, the instructions cause the electronic device 1000 to
display the second application B in a landscape mode layout or a portrait mode layout based on an aspect ratio of the upper region, and
display the first application A in a landscape mode layout or a portrait mode layout based on an aspect ratio of the lower region.

7. The device 1000 as claimed in any one of the claims 1 to 6, wherein when executed by the at least one processor 310, the instructions cause the electronic device 1000 to
display the first application A in one region and the second application B in the other region among the first region 10a and the second region 20a, which are divided along the boundary 1a caused by the multi-window mode, in the landscape mode,
rotate the boundary 1a to correspond to the rotation of the electronic device 1000 if the electronic device 1000 is identified as being in an unfolded state based on the first folding angle and the second folding angle in the portrait mode,
display the first application A in one region and the second application B in the other region among a first region 10b and a second region 20b, which are divided along a rotated boundary 1b, on the first display 331,
display the second application B in the upper region and the first application A in the lower region among the first region 10c and the second region 20c, which are divided along the first boundary 1-1, if the first housing part 110 is changed from an unfolded state to the partially folded state,
display the second application B in the upper region and display the first application A in the lower region among the first region 10d and the second region 20d, which are divided along the second boundary 1-2, if the third housing part 130 is changed from an unfolded state to the partially folded state.

8. The device 1000 as claimed in any one of the claims 1 to 7, wherein when executed by the at least one processor 310, the instructions cause the electronic device 1000 to
display one activated application in the upper region and display the other application in the lower region among the first application A and the second application B at a time at which either the first housing part 110 or the third housing part 130 is identified as being in the partially folded state if each of the first application A and the second application B corresponds to the predetermined type.

9. The device 1000 as claimed in any one of the claims 1 to 8, wherein when executed by the at least one processor 310, the instructions cause the electronic device 1000 to
display the first application A in the landscape mode,
rotate and display the first application A if the electronic device 1000 is identified as being in the unfolded state in the portrait mode,
enter the multi-window mode if the first housing part 110 is identified as switching from the unfolded state to the partially folded state,
display the first application A in the first region 10c disposed in the upper region among the first region 10c and the second region 20c, which are divided along the first boundary 1-1, and
display the second application B including information related to content provided by the first application A in the second region 20c disposed in the lower region.

10. The device 1000 as claimed in claim 1, wherein when executed by the at least one processor 310, the instructions cause the electronic device 1000 to display the second application B in a left region and the first application A in a right region among the first region 10c or 10d and the second region 20c or 20d, which are divided along the first boundary 1-1 caused by the partially folded state of the first housing part 110 or the second boundary 1-2 caused by the partially folded state of the third housing part 130, if the electronic device switches from the portrait mode to the landscape mode.

11. A control method of an electronic device, in which the electronic device includes a first housing part, a second housing part pivotally coupled to the first housing part, a third housing part pivotally coupled to the second housing part, a first hinge structure pivotally connecting the first housing part to the second housing part, a second hinge structure pivotally connecting the second housing part to the third housing part, a first display disposed on a first surface that extends across the first housing part, the second housing part, and the third housing part, a first sensor configured to detect a first folding angle between the first housing part and the second housing part, a second sensor configured to detect a second folding angle between the second housing part and the third housing part, and a third sensor configured to detect a rotation of the electronic device, the method comprising:
an operation (S1101) of displaying a first application and a second application in a landscape mode, wherein the second application corresponds to a predetermined type;
an operation (S1102) of identifying a switch of the electronic device from the landscape mode to a portrait mode based on the rotation detected through the third sensor, wherein the portrait mode defines a top edge and a bottom edge of the first display;
an operation (S1103) of identifying whether either first housing part or the third housing part 130 is in a partially folded state based on the first folding angle detected through the first sensor and the second folding angle detected through the second sensor;
an operation (S1104) of displaying the second application in an upper region and displaying the first application in a lower region among a first region and a second region, wherein the first region and the second region are divided along a first boundary caused by the partially folded state of the first housing part, if the first housing part is identified as being in the partially folded state; and an operation (S1105) of displaying the second application in the upper region and displaying the first application in the lower region among the first region and the second region, wherein the first region and the second region are divided along a second boundary caused by the partially folded state of the third housing part, if the third housing part is identified as being in the partially folded state,
wherein the upper region is defined as the region among the first region and the second region that is adjacent the top edge and the bottom region is defined as the region among the first region and the second region that is adjacent to the bottom edge.

12. The method as claimed in claim 11, wherein the operation of displaying the applications in the landscape mode includes
an operation of displaying the first application in one region and displaying the second application in the other region among a first region and a second region, which are divided along a boundary caused by a multi-window mode, in the landscape mode,
the operation of identifying whether the housing part is in the partially folded state includes
an operation of identifying whether the first housing part is in the partially folded state if the switch to the portrait mode is identified, and
the operation of displaying the first application and the second application if the first housing part is in the partially folded state includes
an operation of displaying the second application corresponding to the predetermined type in the first region disposed in the upper region and displaying the first application in the second region disposed in the lower region among the first region and the second region, which are divided along the first boundary caused by the partially folded state of the first housing part, in the portrait mode,
the first region corresponding to the first housing part, and
the second region corresponding to the second housing part and the third housing part.

13. The method as claimed in claim 11, wherein the operation of displaying the applications in the landscape mode includes
an operation of displaying the first application in one region and displaying the second application in the other region among a first region and a second region, which are divided along a boundary caused by a multi-window mode, in the landscape mode,
the operation of identifying whether the housing part is in the partially folded state includes
an operation of identifying whether the first housing part is in the partially folded state if the switch to the portrait mode is identified, and
the operation of displaying the first application and the second application if the first housing part is in the partially folded state includes
an operation of displaying the second application corresponding to the predetermined type in the second region disposed in the upper region and displaying the first application in the first region disposed in the lower region among the first region and the second region, which are divided along the first boundary caused by the partially folded state of the first housing part, in the portrait mode,
the first region corresponding to the first housing part, and
the second region corresponding to the second housing part and the third housing part.

14. The method as claimed in claim 11, wherein the operation of displaying the applications in the landscape mode includes
an operation of displaying the first application in one region and display the second application in the other region among a first region and a second region, which are divided along a boundary caused by a multi-window mode, in the landscape mode,
the operation of identifying whether the housing part is in the partially folded state includes
an operation of identifying whether the third housing part is in the partially folded state if the switch to the portrait mode is identified, and
the operation of displaying the first application and the second application if the third housing part is in the partially folded state includes
an operation of displaying the second application corresponding to the predetermined type in the first region disposed in the upper region and displaying the first application in the second region disposed in the lower region among the first region and the second region, which are divided along the second boundary caused by the partially folded state of the third housing part, in the portrait mode,
the first region corresponding to the first housing part and the second housing part, and
the second region corresponding to the third housing part.

15. The method as claimed in claim 11, wherein the operation of displaying the applications in the landscape mode includes
an operation of displaying the first application in one region and display the second application in the other region among a first region and a second region, which are divided along a boundary caused by a multi-window mode, in the landscape mode,
the operation of identifying whether the housing part is in the partially folded state includes
an operation of identifying whether the third housing part is in the partially folded state if the switch to the portrait mode is identified, and
the operation of displaying the first application and the second application if the third housing part is in the partially folded state includes
an operation of displaying the second application corresponding to the predetermined type in the second region disposed in the upper region and displaying the first application in the first region disposed in the lower region among the first region and the second region, which are divided along the second boundary caused by the partially folded state of the third housing part, in the portrait mode,
the first region corresponding to the first housing part and the second housing part, and
the second region corresponding to the third housing part.
